(19)

(11) **EP 2 193 054 B1**

(12) # EUROPÄISCHE PATENTSCHRIFT

(45) Veröffentlichungstag und Bekanntmachung des Hinweises auf die Patenterteilung:
**01.06.2011 Patentblatt 2011/22**

(21) Anmeldenummer: **08835972.4**

(22) Anmeldetag: **29.09.2008**

(51) Int Cl.:
***B60R 22/28*** *(2006.01)* ***B60R 22/18*** *(2006.01)*

(86) Internationale Anmeldenummer:
**PCT/EP2008/063021**

(87) Internationale Veröffentlichungsnummer:
**WO 2009/043837 (09.04.2009 Gazette 2009/15)**

(54) **SCHLOSSUMLENKEINRICHTUNG**

LOCK DEFLECTION APPARATUS

DISPOSITIF DE DEVIATION DE SERRURE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **28.09.2007 DE 102007047549**
**12.02.2008 PCT/EP2008/051691**

(43) Veröffentlichungstag der Anmeldung:
**09.06.2010 Patentblatt 2010/23**

(73) Patentinhaber: **Takata-Petri AG**
**63743 Aschaffenburg (DE)**

(72) Erfinder:
- **WENDT, Mario**
  **14473 Potsdam (DE)**
- **VIDOLOV, Kliment**
  **10787 Berlin (DE)**
- **KATO, Atsuaki**
  **10439 Berlin (DE)**
- **YOSHIKAWA, Hiromichi**
  **10115 Berlin (DE)**

(74) Vertreter: **Müller, Wolfram Hubertus et al**
**Patentanwälte**
**Maikowski & Ninnemann**
**Postfach 15 09 20**
**10671 Berlin (DE)**

(56) Entgegenhaltungen:
**DE-A1- 10 210 781** **DE-C1- 3 233 797**
**DE-U1- 20 303 549** **GB-A- 2 349 615**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die Erfindung betrifft eine Schlossumlenkeinrichtung für ein Kraftfahrzeug, mit einer Schlosszunge zum Einstecken in eine Schlossschnalle und einem mit der Schlosszunge gekoppelten Umlenkkörper, der dazu ausgebildet ist, einen Sicherheitsgurt in ein Schultersegment und ein Beckensegment zu unterteilen und derart umzulenken, dass die beiden Segmente in unterschiedlichen Richtungen vom Umlenkkörper abgehen. Eine solche Schlossumlenkeinrichtung ist aus der DE 32 33 797 C1 bekannt.

Der Erfindung liegt das Problem zugrunde, eine verbesserte Schlossumlenkeinrichtung bereitzustellen.

Dieses Problem wird durch eine Schlossumlenkeinrichtung mit den Merkmalen des Anspruchs 1 gelöst.

Danach ist vorgesehen, dass der Umlenkkörper über zumindest ein längs erstrecktes Element mit der Schlosszunge verbunden ist, das zumindest abschnittsweise um den Umlenkkörper gewickelt ist, wobei das längs erstreckte Element bevorzugt zumindest abschnittsweise eng am Umlenkkörper anliegt. Vorzugsweise ist das mindestens eine längs erstreckte Element durch eine am Schultersegment angreifende Kraft vom Umlenkkörper abwickelbar, um die resultierende, an dem Schultersegment angreifende Kraft zu begrenzen. Oder anders gesagt, der Umlenkkörper wird durch am Schultersegment angreifende Kräfte in eine Rotation versetzt, bei der sich das längs erstreckte Element vom Umlenkkörper abwickelt.

In einer Ausführungsform der Erfindung sind das mindestens eine längs erstreckte Element (bzw. beide längs erstreckten Elemente) und die Schlosszunge als separate Bauteile ausgeführt, die untereinander fest verbunden sind. Eine derartige Anordnung ermöglicht es, die genannten Elemente hinsichtlich ihrer Funktionserfüllung geeignet auszulegen, insbesondere über ihre Materialzusammensetzung. Des Weiteren sind hierdurch im Vergleich zur einstückigen Ausführung kompliziertere Bauteilgeometrien möglich.

Alternativ hierzu können die längs erstreckten Elemente einstückig an die Schlosszunge angeformt sein und können wie die Schlosszunge vorzugsweise aus einem Metall bestehen. Der Umlenkkörper besteht vorzugsweise aus einem Metall und/oder Kunststoff.

Bevorzugt wird das mindestens eine längs erstreckte Element durch eine am Schultersegment angreifende Kraft vom Umlenkkörper unter Verformung abgerollt, um die resultierende, an dem Schultersegment angreifende Kraft zu begrenzen. Diese wird beim Verformen des längs erstreckten Elementes absorbiert.

Vorzugsweise erstreckt sich der Umlenkkörper entlang einer Erstreckungsrichtung. Bei einem Umlenkkörper in Form einer Rolle verläuft jene Erstreckungsrichtung parallel zur Rotationsachse (Zylinderachse) des rollenförmigen Umlenkkörpers. Dabei ist das mindestens eine längs erstreckte Element quer zu der Erstreckungsrichtung des Umlenkkörpers um den Umlenkkörper herumgewickelt, und zwar bevorzugt um einen freien Endabschnitt des Umlenkkörpers. Dieser Endabschnitt ist vorzugsweise mit einem weiteren freien Endabschnitt des Umlenkkörpers verbunden, der dem anderen Endabschnitt des Umlenkkörpers entlang der Erstreckungsrichtung des Umlenkkörpers gegenüber liegt. Zwischen den beiden Endabschnitten ist entlang der Erstreckungsrichtung ein mittlerer Abschnitt des Umlenkkörpers angeordnet. Die drei Abschnitte können einstückig aneinander angeformt sein.

In einer besonders bevorzugten Ausführungsform der Erfindung weist der Umlenkkörper jedoch ein erstes und ein dazu separates zweites Teil auf, wobei bevorzugt das erste Teil des Umlenkkörpers das zweite Teil des Umlenkkörpers in einer senkrecht zur Erstreckungsrichtung verlaufenden Ebene umgibt. Somit bildet das erste Teil einen mittleren Abschnitt des Umlenkkörpers. Bevorzugt wird das erste Teil durch Umspritzen des zweiten Teils mit einem Kunststoff erzeugt, so dass das zweite Teil formschlüssig im ersten Teil des Umlenkkörpers gehalten wird.

Dabei weist das zweite Teil bevorzugt zwei freie Endabschnitte auf, die entlang der Erstreckungsrichtung einander gegenüberliegen und an einander entlang der Erstreckungsrichtung abgewandten Stirnseiten des ersten Teiles aus dem ersten Teil des Umlenkkörpers hinausragen.

Vorzugsweise ist das mindestens eine längs erstreckte Element um einen solchen freien Endabschnitt herumgewickelt. Herumgewickelt ist dabei auch im Sinne von herumgelegt zu verstehen, d.h., das längs erstreckte Element muss den fraglichen Endabschnitt bzw. Umlenkkörper nicht zwangsläufig mehrmals umlaufen.

Besonders bevorzugt weist die Schlossumlenkeinrichtung ein weiteres längs erstrecktes Element auf, das mit der Schlosszunge verbunden ist und das zumindest abschnittsweise um den Umlenkkörper herumgewickelt ist, wobei das weitere längs erstreckte Element ebenfalls durch eine am Schultersegment angreifende Kraft, die jene Schwellenkraft übersteigt, vom Umlenkkörper abgewickelt wird, um die resultierende, an dem Schultersegment angreifende Kraft zu begrenzen.

D.h., dieses weitere längs erstreckte Element wird in gleicher Weise wie das andere längs erstreckte Element durch eine vorbestimmbare am Schultersegment angreifende Kraft vom Umlenkkörper abgewickelt, wobei die resultierende, an dem Schultersegment angreifende Kraft begrenzt wird, da die Umlenkrolle durch ihre Abrollbewegung das Schultersegment entlastet.

Das weitere längs erstreckte Element ist bevorzugt um den weiteren freien Endabschnitt des Umlenkkörpers gewickelt, so dass der Sicherheitsgurt entlang des Umlenkkörpers zwischen den beiden längs erstreckten Elementen um den mittleren Abschnitt des Umlenkkörpers herum gelegt ist.

In einer Ausführungsform der Erfindung ist vorgesehen, dass das mindestens eine längs erstreckte Element in Form einer Spirale zumindest abschnittsweise um den Umlenkkörper herumgewickelt ist, und zwar insbesondere um den mindestens einen freien Endabschnitt des zweiten Teils. Vorzugsweise sind zwei längs erstreckte Elemente vorgesehen, die jeweils um einen zugeordneten freien Endabschnitt des zweiten Teiles spiralförmig herumgewickelt sind.

Bevorzugt weist die Schlossumlenkeinrichtung zwei Befestigungsbereiche auf, wobei die beiden längs erstreckten Elemente über je einen der Befestigungsbereiche an der Schlosszunge befestigt sind, und wobei jene Befestigungsbereiche über einen Schenkel miteinander verbunden sind, so dass bevorzugt eine Durchgangsöffnung der Schlosszunge ausgebildet wird.

Jener Schenkel erstreckt sich vorzugsweise entlang der besagten Erstreckungsrichtung und ist vorzugsweise einstückig an die Befestigungsbereiche angeformt.

In einer Variante der Erfindung sind jene beiden Befestigungsbereiche jeweils einstückig an die Schlosszunge angeformt.

In einer alternativen Variante der Erfindung bildet der besagte Schenkel zusammen mit den beiden Befestigungsbereichen ein separates Bauteil, das über jene Befestigungsbereiche sowohl mit der Schlosszunge als auch mit den beiden längs erstreckten Elementen verbunden ist.

Vorzugsweise ist der Schenkel in den vorstehenden Varianten jeweils drehfest mit dem Umlenkkörper verbunden, und zwar insbesondere mit dem ersten Teil des Umlenkkörpers. Diese Verbindung wird vorzugsweise geschaffen, indem der besagte Schenkel formschlüssig umspritzt wird, wobei das besagte erste Teil als Umspritzung des Schenkels geschaffen wird. Somit umschließt das erste Teil den besagten Schenkel insbesondere formschlüssig.

Des Weiteren ist der Schenkel bei den vorstehenden Varianten über je eine durch Krafteinwirkung zerstörbare Verbindung (Sollbruchverbindung) mit den beiden Befestigungsbereichen verbunden, wobei die beiden Verbindungen vorzugsweise so ausgelegt sind, dass sie durchreißen, wenn eine am Schultersegment angreifende Kraft die vorbestimmbare Schwellenkraft übersteigt. Über die besagten Verbindungen (Sollbruchverbindungen) ist der Schenkel vorzugsweise einstückig an die Befestigungsbereiche angeformt.

Weiterhin können auch die beiden längs erstreckten Elemente über einen Verbindungsabschnitt, der auch in Form einer Mehrzahl an Verstärkungsstreben vorliegen kann, miteinander verbunden sein. Somit können die längs erstreckten Elemente auch einstückig aneinander angeformt sein.

Die beiden Endabschnitte des zweiten Teils des Umlenkkörpers und das erste Teil des Umlenkkörpers (mittlerer Abschnitt) weisen je eine Querschnittsfläche auf (in einer senkrecht zur Erstreckungsrichtung des Umlenkkörpers erstreckten Ebene), wobei die Querschnittsflächen der Endabschnitte vorzugsweise deckungsgleich ausgebildet sind, und wobei die beiden Endabschnitte und der mittlere Abschnitt entlang der Erstreckungsrichtung vorzugsweise einen konstanten Querschnitt aufweisen, und zwar sowohl hinsichtlich der Querschnittskontur als auch hinsichtlich der Querschnittsfläche.

In einer Variante der Erfindung sind die Querschnittsflächen der Endabschnitte des Umlenkkörpers jeweils kleiner als die Querschnittsfläche des ersten Teils des Umlenkkörpers. Die Querschnittsfläche des ersten Teils ist diejenige Fläche, die durch dessen äußere Querschnittskontur eingeschlossen wird. Etwaige Durchgangsöffnungen des ersten Teils, in denen z.B. das zweite Teil angeordnet ist, werden von der Querschnittsfläche des ersten Teils nicht abgezogen.

Durch das Verhältnis der Querschnittsfläche eines Endabschnittes zur Querschnittsfläche des ersten Teils lässt sich die Kraft kontrollieren, die zum Abwickeln des mindestens einen längs erstreckten Elementes vom Umlenkkörper in den Umlenkkörper eingeleitet werden muss. Entscheidend ist dabei, dass durch die unterschiedlichen Querschnitte (bei kreisförmigen Querschnitten einer Umlenkrolle werden diese allein durch den normal auf der Zylinderachse stehenden Radius der Umlenkrolle bestimmt) der Abstand zwischen demjenigen Punkt, über den die Endabschnitte (im Querschnitt betrachtet) beim Abwickeln der längs erstreckten Elemente abrollen (Abrollpunkt) und demjenigen Punkt, von dem das Schultersegment (im Querschnitt betrachtet) vom mittleren Abschnitt der Umlenkrolle abgeht bzw. demjenigen Punkt von dem das Beckensegment (im Querschnitt betrachtet) vom mittleren Abschnitt der Umlenkrolle abgeht, variiert wird.

Für den Fall, dass die Endabschnitte jeweils eine Querschnittsfläche aufweisen, die kleiner ist als die Querschnittsfläche des ersten Teils, bewirkt die am Schultersegment angreifende Kraft, sofern sie die Schwellenkraft übersteigt, eine Rotation der Umlenkrolle (des Umlenkkörpers), wohingegen die am Beckensegment angreifende Kraft dieser Rotation entgegen wirkt. Beide in den jeweiligen Gurtsegmenten wirkende Kraftkomponenten weisen hier Hebelarme bezüglich des Abrollpunktes auf, über den an der Umlenkrolle entgegengesetzt wirkende Momente erzeugt werden können.

Die beiden freien Endabschnitte des zweiten Teils des Umlenkkörpers können jeweils zylinderförmig ausgebildet sein und weisen eine gemeinsame, mit der Erstreckungsrichtung zusammenfallende Zylinderachse auf. Vorzugsweise ist das erste Teil (der mittlere Abschnitt) des Umlenkkörpers ebenfalls zylinderförmig ausgebildet, wobei dessen Zylinderachse bevorzugt mit der Zylinderachse der Endabschnitte des Umlenkkörpers zusammenfällt. Alternativ hierzu kann die Querschnittskontur (in einer senkrecht zur Erstreckungsrichtung der Umlenkkörpers verlaufenden Ebene) der Endabschnitte auch von einer kreisförmigen Kontur abweichen und beispielsweise in Form einer abgeflachten kreisförmigen oder ovalen Kontur vorliegen.

Zur Anlage des Sicherheitsgurtes am Umlenkkörper weist dieser einen Anlagebereich auf, um den der Sicherheitsgurt herum gelegt ist und an dem der Sicherheitsgurt entlang gleiten kann. Der Anlagebereich ist bevorzugt am ersten Teil (mittleren Abschnitt) des Umlenkkörpers vorgesehen und ist vorzugsweise dazu eingerichtet und vorgesehen, derart mit dem Sicherheitsgurt zusammenzuwirken, dass bei einer am Schultersegment angreifenden Kraft, die größer gleich einer vorbestimmbaren Schwellenkraft ist, der um den Anlagebereich herum gelegte Sicherheitsgurt den Umlenkkörper durch einen Reibschluss zu einer Drehbewegung um die Zylinderachse (Rotationsachse) mitnimmt, wobei das mindestens eine längs erstreckte Element vom Umlenkkörper abgewickelt wird.

Dabei ist die Oberfläche des Umlenkkörpers am Anlagebereich derart beschaffen, dass bei einer am Schultersegment angreifenden Kraft, die geringer ist als die besagte Schwellenkraft, ein Entlanggleiten des Sicherheitsgurtes am Umlenkkörper aufgrund der sich ergebenden Reibungsverhältnisse möglich ist, ohne dass dieser durch den Sicherheitsgurt mitgenommen wird und seine Abrollbewegung vollführt.

Besonders bevorzugt ist der Anlagebereich derart strukturiert (weist Unebenheiten auf), dass eine Relativverschiebung des Sicherheitsgurtes entlang des- Anlagebereiches in einer vom Schultersegment zum Beckensegment verlaufenden Gurtverlaufsrichtung ein stärkerer Widerstand entgegen gesetzt wird als in der umgekehrten Gurtverlaufsrichtung.

Vorzugsweise weist der Anlagebereich eine erste und eine zweite Anlagefläche auf, wobei der Sicherheitsgurt bevorzugt bei einer am Schultersegment angreifenden Kraft, die kleiner als die Schwellenkraft ist, lediglich an der ersten Anlagefläche anliegt, und wobei der Sicherheitsgurt bei einer am Schultersegment angreifenden Kraft, die größer gleich jener Schwellenkraft ist, zusätzlich zur Anlage an die zweite Anlagefläche gelangt.

Dabei herrscht zwischen der zweiten Anlagefläche und dem Sicherheitsgurt bevorzugt eine Reibung, die ein Mitnehmen des Umlenkkörpers durch den Sicherheitsgurt bewirkt, wenn der Sicherheitsgurt an der zweiten Anlagefläche anliegt. Demgegenüber herrscht zwischen der ersten Anlagefläche und dem Sicherheitsgurt eine Reibung, die ein Entlanggleiten des Sicherheitsgurtes am Umlenkkörper ohne Mitnahme des Umlenkkörpers durch den Sicherheitsgurt erlaubt (d.h., die längs erstreckten Elemente werden nicht vom Umlenkkörper abgewickelt), wenn der Sicherheitsgurt nur an der ersten Anlagefläche anliegt.

In einem weiteren Ausführungsbeispiel der Erfindung steht die erste Anlagefläche entlang einer Normalen der zweiten Anlagefläche statisch über die zweite Anlagefläche hinaus, so dass der Gurt bei einer am Schultersegment angreifenden Kraft, die kleiner als die vorbestimmbare Schwellenkraft ist, lediglich an der ersten Anlagefläche anliegt, wohingegen der Sicherheitsgurt bei einer am Schultersegment angreifenden Kraft, die größer gleich jener Schwellenkraft ist, sich derart deformiert, dass er sich eng an die zweite Anlagefläche (und die erste Anlagefläche) anschmiegt.

Die erste Anlagefläche wird hierbei durch einen vom Umlenkkörper abragenden Steg bereitgestellt, und zwar durch dessen dem Umlenkkörper abgewandte Oberfläche, die dem Sicherheitsgurt zugewandt ist.

Bevorzugt umläuft der Steg am Umlenkkörper quer zur Erstreckungsrichtung ringförmig, wobei vorzugsweise eine Mehrzahl an solchen Stegen vorgesehen sind, die entlang der Erstreckungsrichtung beabstandet zueinander am Umlenkkörper umlaufen. Hierdurch werden am Umlenkkörper umlaufende Vertiefungen gebildet, deren Böden jeweils Teile der zweiten Anlagefläche bilden. Greift an dem Schultersegment eine Kraft an, die die vorbestimmbare Schwellenkraft übersteigt, so zieht sich der Sicherheitsgurt in jene Vertiefungen hinein und kommt zusätzlich zur Anlage an die zweite Anlagefläche, die die Reibung zwischen Gurt und Umlenkkörper solchermaßen erhöht, dass der Sicherheitsgurt den Umlenkkörper mitnimmt, wobei das mindestens eine längs erstreckte Element vom Umlenkkörper abgerollt wird.

In einer alternativen Variante erstreckt sich der Steg spiralförmig um den Umlenkkörper herum, so dass die erste Anlagefläche erste Abschnitte aufweist, die entlang derjenigen Richtung orientiert sind, entlang der das Schultersegment vom Umlenkkörper abgeht, sowie zweite Abschnitte, die entlang derjenigen Richtung orientiert sind, entlang der das Beckensegment vom Umlenkkörper abgeht.

Vorzugsweise sind die vorgenannten Stege einstückig an den Umlenkkörper angeformt und bilden daher vorzugsweise einen integralen Bestandteil des Umlenkkörpers.

Der erhöhte Reibkoeffizient der zweiten Anlagefläche des Umlenkkörpers wird vorzugsweise durch eine Strukturierung der zweiten Anlagefläche erreicht. D.h., die zweite Anlagefläche weist eine Vielzahl von kleinen Erhebungen auf, die die effektive Oberfläche der zweiten Anlagefläche gegenüber der ersten Anlagefläche signifikant erhöhen und damit auch die Reibung zwischen dem Sicherheitsgurt und der zweiten Anlagefläche der Umlenkrolle

Vorzugsweise sind die Erhebungen zackenförmig (dreieckförmig) ausgebildet (Sperrnasen), wobei die Erhebungen bevorzugt im Querschnitt zwei spitzwinklig aufeinander zulaufende Seiten aufweisen, die in Bezug auf eine Normale der zweiten Anlagefläche jedoch eine unterschiedliche Steigung aufweisen können, d.h., die Erhebungen (Sperrnasen) sind bevorzugt richtungsabhängig ausgebildet (siehe oben), und zwar derart, dass einer Relativbewegung zwischen dem Umlenkkörper und dem Sicherheitsgurt infolge einer über das Beckensegment eingeleiteten Kraft ein größerer Widerstand entgegengesetzt wird als bei einer über das Schultersegment eingeleiteten Kraft. Die Erhebungen können in Strukturen des - in der Regel aus einzelnen Fasern hergestellten - Sicherheitsgurtes eingreifen bzw. diese hinter greifen, so dass zwischen dem Sicherheitsgurt und den Erhebungen der zweiten Anlagefläche eine formschlüssige Verbindung hergestellt wird, wenn der Sicherheitsgurt mit einer vorbestimmbaren Schwellenkraft gegen die zweite Anlagefläche drückt. Bevorzugt sind die Spitzen der Erhebungen abgeflacht, um den Sicherheitsgurt nicht zu sehr zu beanspruchen.

Vorzugsweise ist der Umlenkkörper so ausgebildet, dass das Verhältnis zwischen der Länge des Hebelarms einer über das Schultersegment am Umlenkkörper angreifenden Kraft und der Länge des Hebelarms einer über das Beckensegment am Umlenkkörper angreifenden Kraft, die jeweiligen Längen bezogen auf den momentanen Abrollpunkt, bei einem nicht abgewickelten längs erstreckten Element kleiner ist, als bei einem zumindest teilweise abgewickelten längs erstreckten Element (d.h., der Umlenkkörper wurde um seine parallel zur Erstreckungsrichtung verlaufende Achse gedreht bzw. von den längs erstreckten Elementen abgerollt). Das vorstehend Ausgeführte gilt entsprechend für zwei längs erstreckte Elemente.

Über die vorstehend dargelegten geometrischen Verhältnisse kann die Kraftverteilung in den von der Schlossumlenkeinrichtung abgehenden Gurtsegmenten im Crashfall gezielt beeinflusst werden. Ziel ist dabei die Begrenzung der im Schultersegment wirkenden Kraft, wobei gleichzeitig zur Verbesserung der Rückhalteperformance die im Beckensegment wirkende Kraft erhöht werden soll.

Vorzugsweise liegen die Zahlenwerte des besagten Verhältnisses zwischen der Länge des Hebelarms einer über das Schultersegment am Umlenkkörper angreifenden Kraft und der Länge des Hebelarms einer über das Beckensegment am Umlenkkörper angreifenden Kraft im Bereich von 1,3 bis 6.

Weitere Merkmale und Vorteile der Erfindung werden bei der nachfolgenden Beschreibung von Ausführungsbeispielen anhand der Figuren verdeutlicht. Es zeigen:

Fig. 1: eine schematische Schnittdarstellung der an einem Umlenkkörper wirkenden Kräfte $F_{Schulter}$ und $F_{Becken}$;

Fig. 2-3: eine weitere schematische Schnittdarstellung des in der Figur 1 darge-stellten Umlenkkörpers, mit einer zusätzlichen Einspannung des Umlenkkörpers in Form einer Verbindung des Umlenkkörpers mit einer Fahrzeugtragstruktur;

Fig. 4: eine weitere schematische Schnittdarstellung des in den Figuren 1 bzw. 3 dargestellten Umlenkkörpers, mit einer zusätzlichen Verbindung zwischen der Umlenkrolle und der Fahrzeugtragstruktur über ein elastisch deformierbares Deformationselement (Feder);

Fig. 5: eine perspektivische Ansicht einer erfindungsgemäßen Schlossumlenkein-richtung, bei der ein Umlenkkörper über um den Umlenkkörper herumgewickelte längs erstreckte Elemente mit einer Schlosszunge verbunden ist, wobei der Umlenkkörper über zusätzliche dehnbare Deformationselemente mit der Schlosszunge verbunden ist;

Fig. 6: eine schematische Schnittdarstellung einer Abwandlung der in der Figur 5 gezeigten Schlossumlenkeinrichtung, mit Deformationselementen in Form von ausziehbaren Stiften;

Fig. 7: eine schematische Schnittdarstellung einer Abwandlung der in der Figur 5 bzw. 6 gezeigten Schlossumlenkeinrichtung, bei der das Deformationselement als eine verbiegbare Lasche ausgeformt ist;

Fig. 8: eine perspektivische Ansicht einer Abwandlung der in der Figur 5 gezeigten Schlossumlenkeinrichtung;

Fig.9-10: eine schematische Schnittdarstellung eines Umlenkkörpers einer erfindungsgemäßen Schlossumlenkeinrichtung, mit einem um den Umlenkkörper herum gelegten Sicherheitsgurt, wobei der Umlenkkörper eine erste und eine zweite Anlagefläche aufweist, und wobei der Reibungskoeffizient der zweiten Anlagefläche größer ist als der der ersten Anlagefläche;

Fig. 11-12: eine schematische Schnittdarstellung eines Umlenkkörpers einer erfindungsgemäßen Schlossumlenkeinrichtung, mit daran elastisch gelagerten bewegbaren Elementen, deren Stirnseiten die erste Anlagefläche bilden;

Fig. 13-14: eine schematische Schnittdarstellung einer Abwandlung des in den Figuren 11 und 12 dargestellten Umlenkkörpers;

Fig. 15-16: eine schematische Schnittdarstellung einer weiteren Abwandlung des in den Figuren 11 und 12 dargestellten Umlenkkörpers, wobei die bewegbaren Elemente mittels einer abscherbaren Verbindung mit dem Umlenkkörper verbunden sind;

Fig. 17-18: eine schematische Schnittdarstellung einer weiteren Abwandlung des in den Figuren 11 und 12 dargestellten Umlenkkörpers, bei dem die bewegbaren Elemente mittels einer Rastverbindung in einer ausgerückten Stellung am Umlenkkörper festgelegt sind;

Fig. 19-20: eine schematische Schnittdarstellung einer weiteren Abwandlung des in den Figuren 11 und 12 dargestellten Umlenkkörpers, bei dem die bewegbaren Elemente als Blattfedern ausgebildet sind;

Fig. 21-22: eine schematische Schnittdarstellung einer weiteren Abwandlung des in den Figuren 11 und 12 dargestellten Umlenkkörpers, bei dem ein bewegbares Element in Form einer Drahtklammer vorgesehen ist;

Fig. 23-24: eine schematische Schnittdarstellung einer weiteren Abwandlung des in den Figuren 11 und 12 dargestellten Umlenkkörpers, mit bezüglich des Umlenkkörpers unbeweglichen ersten Anlageflächen;

Fig. 25-26: eine schematische Schnittdarstellung einer weiteren Abwandlung des in den Figuren 23 und 24 dargestellten Umlenkkörpers;

Fig. 27-29: eine schematische Schnittdarstellung eines Umlenkkörpers, der zwei Endabschnitte aufweist, die über einen mittleren Abstand miteinander verbunden sind, wobei der mittlere Abschnitt einen ovalen Querschnitt aufweist;

Fig. 30-31: eine schematische Schnittdarstellung eines Umlenkkörpers, der zwei Endabschnitte aufweist, die über einen mittleren Abstand miteinander verbunden sind, wobei sowohl die Endabschnitte als auch der mittlere Abschnitt einen ovalen Querschnitt aufweisen;

Fig. 32-34: eine schematische Schnittdarstellung eines Umlenkkörpers in Form einer Rolle, wobei der mittlere Abschnitt des Umlenkkörpers einen Durchmesser aufweist, der gleich, kleiner oder größer ist als der Durchmesser der beiden Endabschnitte des Umlenkkörpers;

Fig. 35-37: perspektivische Ansichten einer erfindungsgemäßen Schlossumlenk- einrichtung, mit einem Umlenkkörper der in den Figuren 25 und 26 gezeigten Art;

Fig. 38: eine perspektivische Ansicht einer weiteren erfindungsgemäßen Schlossumlenkeinrichtung;

Fig. 39: ein Detail der Figur 38 in einer perspektivischen Ansicht;

Fig. 40: eine perspektivische Ansicht einer Abwandlung der in der Figur 37 gezeigten Schlossumlenkeinrichtung;

Fig. 41 ein Detail der Figur 40 in einer perspektivischen Ansicht;

Fig. 42 eine perspektivische Ansicht einer Abwandlung der in der Figur 40 gezeigten Schlossumlenkeinrichtung;

Fig. 43 eine perspektivische Ansicht eines Details der Figur 42;

Fig. 44 eine perspektivische Ansicht eines Details einer Abwandlung der in der Figur 42 gezeigten Schlossumlenkeinrichtung;

Fig. 45 eine schematische Schnittansicht der an einem erfindungsgemäßen Umlenkkörper herrschenden Kraftverhältnisse; und

Fig. 46 eine graphische Darstellung eines zeitlichen bzw. winkelabhängigen Verlaufs der in der Figur 45 dargestellten Kraftverhältnisse.

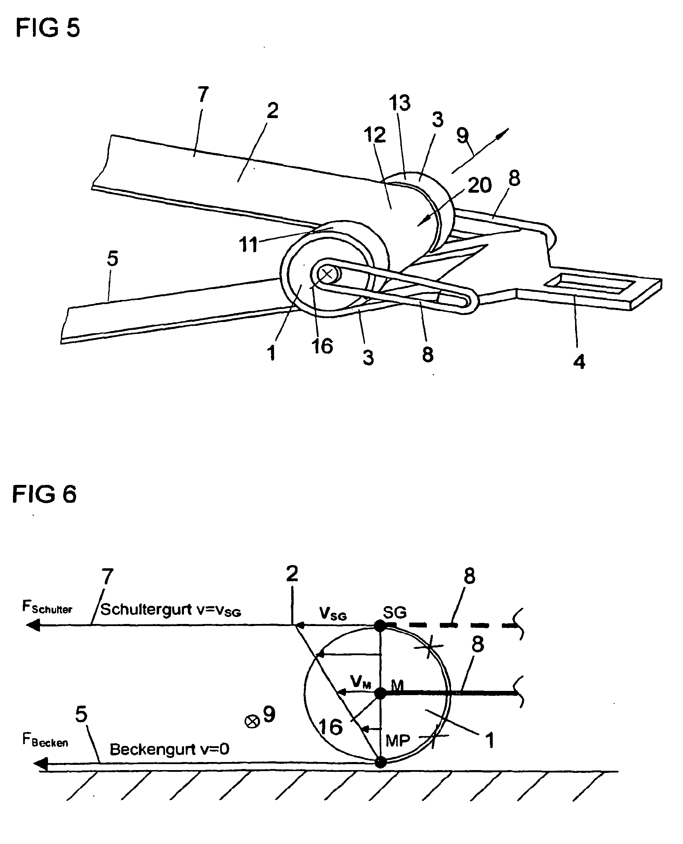

Figur 5 zeigt eine schematische, perspektivische Ansicht einer erfindungsgemäßen Schlossumlenkeinrichtung. Die Schlossumlenkeinrichtung weist eine Schlosszunge 4 zum Einstecken in eine (nicht dargestellte) Schlossschnalle auf, die für gewöhnlich an einer Fahrzeugtragstruktur oder an einem Fahrzeugsitz festgelegt ist. Die Schlosszunge 4 ist über zwei längs erstreckte Elemente 3 mit einem Umlenkkörper 1 verbunden, der zum Umlenken eines Sicherheitsgurtes 2 dient. Bei diesem Sicherheitsgurt 2 kann es sich z.B. um einen bekannten Dreipunktsicherheitsgurt handeln, der ausgehend von einem Gurtspeicher (z.B. Gurtrolle) zu einem etwa auf Höhe der Schulter einer bestimmungsgemäß angegurteten Person am Kraftfahrzeug gelagerten Schulterumlenkbeschlag verläuft, durch diesen umgelenkt wird und sodann diagonal über die Brust jener Person zum Umlenkkörper 1 geführt ist, von wo aus er sich entlang des Beckens des Fahrers zu einer Gurtverankerung erstreckt. Der Sicherheitsgurt 2 ist also um den Umlenkkörper 1 herumgelegt und dieser unterteilt den Sicherheitsgurt 2 in ein diagonal über den Oberkörper der besagten Person verlaufendes Schultersegment 7 und ein entlang des Beckens verlaufendes Beckensegment 5.

Der Umlenkkörper 1 erstreckt sich entlang einer Erstreckungsrichtung 9 längs und ist bei der in der Figur 5 gezeigten Ausführungsform als eine Umlenkrolle ausgebildet, deren Zylinderachse 16 parallel zu jener Erstreckungsrichtung 9 verläuft. Der Umlenkkörper 1 weist zwei freie Endabschnitte 11, 13 auf, die einander entlang der Erstreckungsrichtung 9 bzw. der Zylinderachse 16 gegenüberliegen und über einen mittleren Abschnitt 12 des Umlenkkörpers 1 insbesondere einstückig miteinander verbunden sind. D.h., die drei Abschnitte 11, 12, 13 sind vorzugsweise einstückig aneinander angeformt.

Die Schlosszunge 4 ist nun mittels der beiden längs erstreckten Elemente 3 über die beiden Endabschnitte 11, 13 mit dem Umlenkkörper 1 verbunden, indem diese ausgehend von der Schlosszunge 4 quer zur Erstreckungsrichtung 9 zu je einem zugeordneten Endabschnitt 11, 13 des Umlenkkörpers 1 geführt sind und um diesen herumgewickelt sind. Dabei sind die beiden längs erstreckten Elemente 3 jeweils gleichsinnig um den zugeordneten Endabschnitt 11, 13 gewickelt, wobei die längs erstreckten Elemente 3 den jeweiligen Endabschnitt 11, 13 vorzugsweise um 180° bis 360° umgreifen. Bevorzugt sind die längs erstreckten Elemente 3 über ihr jeweiliges Ende fest mit der Umlenkrolle 1 verbunden (z.B. durch eine Schweißverbindung oder eine formschlüssige Verbindung).

Die längs erstreckten Elemente 3 sind solchermaßen ausgebildet bzw. am Umlenkkörper 1 angeordnet, dass der Umlenkkörper 1 quer zur Erstreckungsrichtung 9 von der Schlosszunge 4 beabstandet angeordnet ist und zusammen mit den längs erstreckten Elementen 3 und der Schlosszunge 4 eine Durchgangsöffnung der Schlossumlenkeinrichtung begrenzt, durch die der um den Umlenkkörper 1 herum gelegte Sicherheitsgurt 2 geführt ist.

Dabei liegt der Sicherheitsgurt 2 an einem Anlagebereich 20 des Umlenkkörpers 1 an, der am mittleren Abschnitt 12 des Umlenkkörpers 1 ausgebildet ist. Der Anlagebereich 20 ist so beschaffen, dass der Sicherheitsgurt 2 am Anlagebereich 20 entlang gleiten kann. Greift allerdings am Schultersegment 7 eine Kraft an, die eine vorbestimmbare Schwellenkraft übersteigt, verändert der Anlagebereich 20 seine Eigenschaften dahingehend, dass nunmehr eine erhöhte Reibung zwischen dem Sicherheitsgurt 2 und dem Anlagebereich 20 herrscht, die bewirkt, dass das Entlanggleiten am Anlagebereich 20 verhindert wird und der Sicherheitsgurt 2 den Umlenkkörper 1 mitnimmt. Hierdurch werden die längs erstreckten Elemente 3 von den Endabschnitten 11, 13 des Umlenkkörpers 1 abgerollt, was eine Begrenzung der resultierenden am Schultersegment 7 angreifenden Kraft zur Folge hat. Der Anlagebereich 20 ist so beschaffen, dass die vorbestimmbare Schwellenkraft bei einer kollisionstypischen Verzögerung des Kraftfahrtzeuges überschritten wird, bei der eine mittels des Sicherheitsgurtes 2 bestimmungsgemäß angegurtete Person mit einer entsprechenden Geschwindigkeit in den Sicherheitsgurt 2 fällt.

Gegebenenfalls können zur Energieabsorption zusätzliche (optionale) Deformationselemente 8 vorgesehen sein. Bei der in der Figur 5 dargestellten Ausführungsform handelt es sich dabei um zwei elastisch deformierbare Elemente in Form einer geschlossenen Schlaufe, die jeweils einen entlang der Zylinderachse 16 vom Umlenkkörper 1 abstehenden Achsstummel mit der Schlosszunge 4 verbinden. Hierzu umgreift ein solches Deformationselement 8 mit einem Schlaufenabschnitt einen mit der Zylinderachse 16 fluchtenden Achstummel des Umlenkkörpers 1 und ist mit einem gegenüberliegenden Schlaufenabschnitt unter Vorspannung an einem an der Schlosszunge 4 ausgebildeten Haken eingehängt. Beim Abrollen der längs erstreckten Elemente 3 vom Umlenkkörper 1 werden die beiden Deformationselemente 8 unter Absorption von Energie gedehnt.

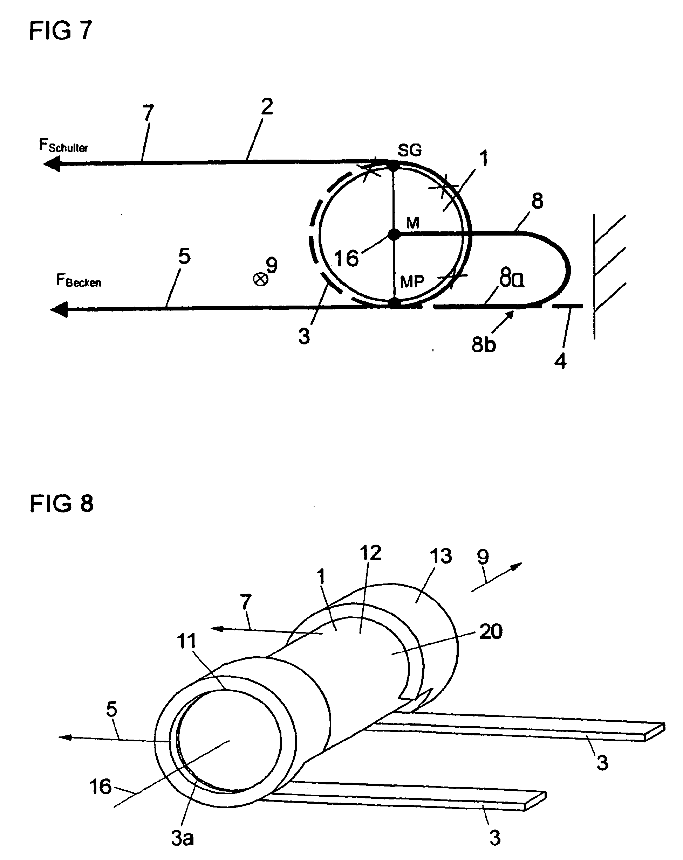

Figur 7 zeigt eine alternative Ausführungsform, bei der im Unterschied zur Figur 5 das Deformationselement 8 als eine inelastisch (plastisch) deformierbare Lasche ausgebildet ist, die wiederum einen Achsstummel des Umlenkkörpers 1 (oder einen entsprechenden Bereich des Umlenkkörpers) mit der Schlosszunge 4 verbindet, wobei die Lasche einen Winkel von zumindest 180° einschließt. Des Weiteren ist die Lasche 8 mit einem Endabschnitt 8a über eine Schwachstelle 8b mit der Schlosszunge 4 verbunden. Im Falle des Abrollens bzw. Abwickelns der längs erstreckten Elemente 3 vom Umlenkkörper 1 erfährt die Lasche 8 zunächst eine Biegeverformung, unter der die Lasche 8 zunächst gerade gezogen wird. Bei zunehmender Entfernung zwischen Umlenkkörper 1 und Schlosszunge 4 werden dann über die geradegezogene Lasche 8 Kräfte in die Schwachstelle 8b eingeleitet, die infolgedessen kontrolliert - ebenfalls unter Absorption von Energie - einreißt, ggf. bis zur vollständigen Durchtrennung der Schwachstelle 8b.

Bei dem Ausführungsbeispiel gemäß Figur 6 ist das Deformationselement 8 als ein ausziehbarer Stift ausgebildet, der den Umlenkkörper 1 (Umlenkrolle) im Bereich der Zylinderachse 16 mit der Schlosszunge 4 verbindet. Alternativ oder zusätzlich ist es möglich einen solchen Stift 8 an einem Bereich des Umlenkkörpers 1 vorzusehen, von dem aus das Schultersegment 7 von der Umlenkrolle abgeht. Bevorzugt wird die Erstreckungsrichtung des Stiftes 8 dabei an derjenigen Richtung ausgerichtet, entlang der das Schultersegment 7 vom Umlenkkörper 1 abgeht. Bei einem als Stift ausgebildeten Deformationselement 8 wird eine Energieabsorption vorzugsweise erreicht, indem der Stift 8 beim Abrollen der längs erstreckten Elemente 3 - hierbei entfernt sich der Umlenkkörper 1 von der Schlosszunge 4 - aus einer an der Schlosszunge 4 (oder ggf. dem Umlenkkörper 1) vorgesehenen Aussparung herausgezogen wird. Dabei kann der Stift 8 derart durch die Aussparung gehalten werden, dass dem Herausziehen des Stiftes 8 ein (vorbestimmbarer) Widerstand entgegengesetzt wird. Vorzugsweise wird dieser Widerstand dadurch bereitgestellt, dass der Stift 8 beim Herausziehen aus der zugeordneten Aussparung um eine oder mehrere Achsen umgebogen wird.

Sofern der Stift 8 mit der Zylinderachse 16 (ggf. über einen Achsstummel) der Umlenkrolle 1 verbunden werden soll, wird der Stift 8 vorzugsweise gelenkig gelagert, so dass er die Rotation der Umlenkrolle 1 nicht beeinträchtigt. Bei Anbringung des Stiftes 8 mit einem Hebelarm relativ zur Zylinderachse 16 kann der Stift 8 auf eine zusätzliche zylindrische Fläche aufgewickelt werden, so dass der Hebelarm konstant bleibt. Wenn die Wickelfläche keinen konstanten Abstand zur Zylinderachse 16 aufweist, ist eine spezielle Kennung der Kraftbegrenzung möglich, beispielsweise degressiv oder progressiv.

Figur 8 zeigt eine weitere Ausführungsform bei der im Unterschied zu den Figuren 5 und 7 keine zusätzlichen Deformationselemente 8 vorgesehen sind. Stattdessen sind bei der in der Figur 8 dargestellten Schlossumlenkeinrichtung die um die Endabschnitte 11, 13 des Umlenkkörpers 1 gewickelten Bereiche der längs erstreckten Elemente 3 selbst über zerstörbare Verbindungen 3a (Schwachstellen 3a) mit den Endabschnitten 11, 13 des Umlenkkörpers 1 verbunden, um dem Abwickeln der längs erstreckten Elemente 3 vom Umlenkkörper 1 durch ein Aufreißen entlang der Schwachstellen 3a einen zusätzlichen definierten (kontrollierbaren) Widerstand entgegenzusetzen. Für eine Sichtbarmachung der Schwachstellen 3a wurde der Endabschnitt 11 eingerückt bezüglich des vorderen längs erstreckten Elementes 3 dargestellt.

Damit der Sicherheitsgurt 2 ab einer bestimmten Schwellenkraft den Umlenkkörper 1 mitnehmen kann, so dass die längs erstreckten Elemente 3 vom Umlenkkörper 1 abgerollt werden, muss der Anlagebereich 20 des Umlenkkörpers 1 abhängig von der am Sicherheitsgurt 2 angreifenden Kraft zwei Zustände einnehmen können, wobei der eine Zustand des Anlagebereichs 20 dadurch gekennzeichnet ist, dass der Sicherheitsgurt 2 bei an diesem angreifenden Kräften, die unterhalb der vorbestimmbaren Schwellenkraft liegen, am Anlagebereich 20 entlang gleiten kann, ohne dass die längs erstreckten Elemente 3 abgerollt werden. Der andere Zustand ist dahingegen dadurch gekennzeichnet, dass zwischen dem Sicherheitsgurt 2 und dem Anlagebereich 20 ein Reib- oder Formschluss erzeugt wird, der eine Relativbewegung zwischen Sicherheitsgurt 2 und Anlagebereich 20 verhindert, wenn die am Schultersegment 7 angreifenden Kräfte jene Schwellenkraft übersteigen.

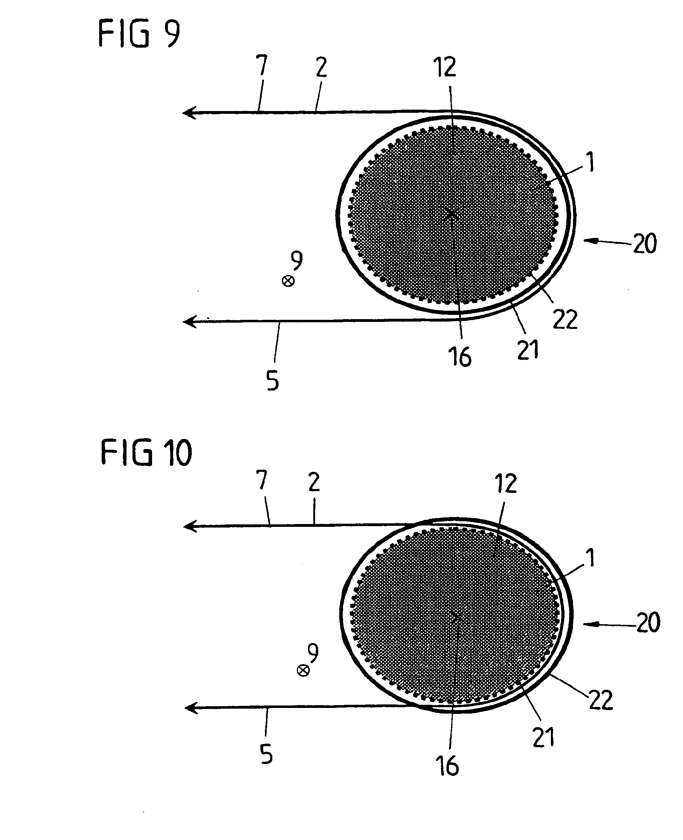

Der Anlagebereich 20 weist daher gemäß den Figuren 9 und 10 eine erste Anlagefläche 21 auf, an der der Sicherheitsgurt 2 anliegt, wenn die am Schultersegment 7 angreifenden Kräfte unterhalb der Schwellenkraft liegen, sowie eine zweite Anlagefläche 22, an der der Sicherheitsgurt 2 anliegt, wenn die besagten Kräfte die Schwellenkraft übersteigen. Dabei ist die Reibung zwischen der ersten Anlagefläche 21 und dem Sicherheitsgurt 2 dergestalt, dass der Sicherheitsgurt 2 an der ersten Anlagefläche 21 entlang gleiten kann, wohingegen die Reibung zwischen der zweiten Anlagefläche 22 und dem Sicherheitsgurt 2 so beschaffen ist, dass der an der zweiten Anlagefläche 22 anliegende Sicherheitsgurt 2 eine Kraft in den Umlenkkörper 1 einleiten kann, aufgrund der der Umlenkkörper 1 durch den Sicherheitsgurt 2 mitgenommen wird und die längs erstreckten Elemente 3 vom Umlenkkörper 1 abgerollt werden.

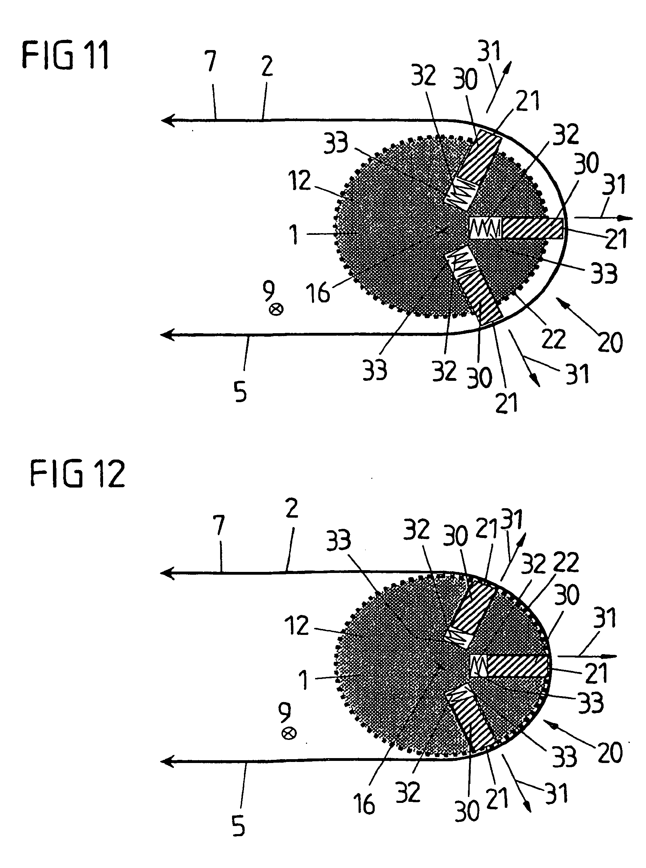

Gemäß dem in den Figuren 11 und 12 gezeigten Ausführungsbeispiel des Umlenkkörpers 1 sind an dem Umlenkkörper 1 bewegbare Elemente 30 gelagert, die zwischen einer ersten und einer zweiten Position hin und her bewegt werden können. Die bewegbaren Elemente 30 sind dabei jeweils in einer schlitz- oder ggf. sacklochförmigen Ausnehmung 33 des Umlenkkörpers 1 formschlüssig geführt, die jeweils entlang einer Normalen 31 zur Oberfläche 22 des Umlenkkörpers 1 erstreckt sind. In ihrer ersten Position stehen die bewegbaren Elemente 30 mit einer dem Sicherheitsgurt 2 zugewandten Stirnseite 21 aus der jeweils zugeordneten Ausnehmung 33 heraus. In diesem Fall liegt der um den Umlenkkörper 1 herum gelegte Sicherheitsgurt 2 lediglich an jenen Stirnseiten 21 an, die in ihrer Gesamtheit die erste Anlagefläche 21 bilden.

Die beweglichen Elemente 30 stützen sich jeweils über ein Federelement 32 an einem Boden der den bewegbaren Elementen 30 jeweils zugeordneten Ausnehmungen 33 ab. Entgegen der durch die Federelemente 32 bereitgestellten Gegenkraft kann jedes bewegbare Element 30 aus seiner ausgerückten ersten Position in seine zweite Position gemäß Figur 12 bewegt werden, in der der Sicherheitsgurt 2 flächig an der äußeren, nach außen gewandten Oberfläche 22 des mittleren Abschnittes 12 des Umlenkkörpers 1 zu liegen kommt. Die zweite Anlagefläche 22 wird also durch die die Ausnehmungen 33 der bewegbaren Elemente 30 berandende Oberfläche 22 des mittleren Abschnittes 12 des Umlenkkörpers 1 gebildet. Die Bewegung der bewegbaren Elemente 30 aus der ersten Position in jene zweite Position wird durch den Sicherheitsgurt 2 bewirkt, der die bewegbaren Elemente 30 in die Ausnehmungen 33 drückt, sofern die am Schultersegment 7 angreifende Kraft die besagte chwellenkraft übersteigt.

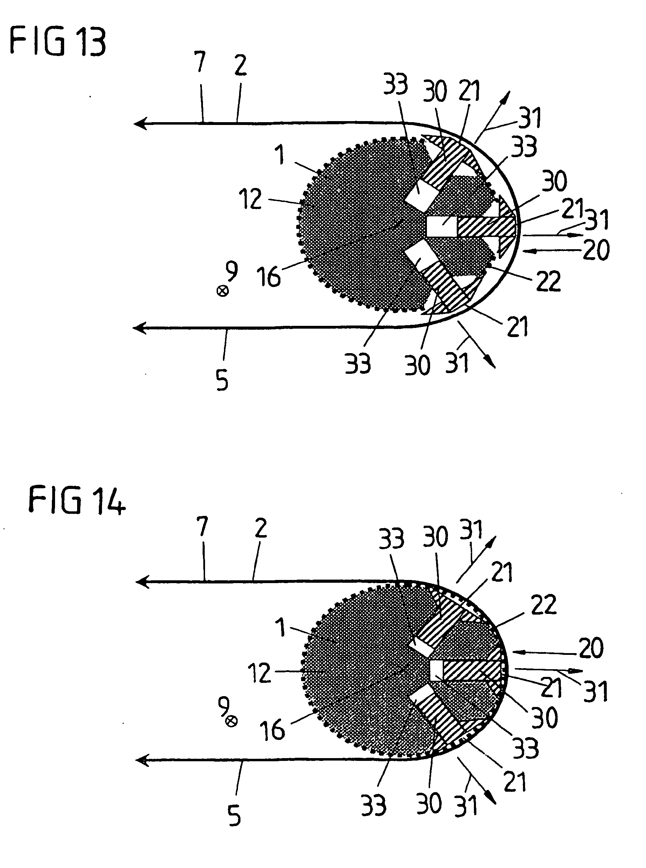

Die Figuren 13 und 14 zeigen eine Abwandlung des in den Figuren 11 und 12 gezeigten Umlenkkörpers 1, bei dem im Unterschied zu den Figuren 11 und 12 die bewegbaren Elemente 30 nicht durch Federelemente 32 in ihrer ersten Position gehalten werden, sondern durch ihre eigene Elastizität. Dabei weisen die bewegbaren Elemente 30 je einen verbreiterten Kopf auf, mit einer dem Sicherheitsgurt 2 zugewandten Oberfläche 22, wobei diese Oberflächen 22 in ihrer Gesamtheit die erste Anlagefläche 22 bilden. In der ersten Position liegen diese Köpfe mit einem äußersten umlaufenden Randbereich auf einem die jeweilige zugeordnete Ausnehmung 33 berandenden Randbereich auf, so dass die ersten Anlageflächen 21 (Oberflächen der Köpfe) entlang einer Normalen 31 der zweiten Anlagefläche 22 (Oberfläche des Umlenkkörpers) über jene zweite Anlagefläche 22 hinausstehen. Der Sicherheitsgurt 2 kann daher in dieser ersten Position der bewegbaren (elastischen) Elemente 30 nur an jenen Köpfen der bewegbaren Elemente 30 (erste Anlagefläche) anliegen. Übersteigt die am Schultersegment 7 angreifende Kraft die vorbestimmbare Schwellenkraft drückt der Sicherheitsgurt 2 die bewegbaren Elemente 30 unter elastischer Verformung der Köpfe der bewegbaren Elemente 30 in ihre zugeordneten Ausnehmungen 33, so dass der Sicherheitsgurt 2 flächig an der zweiten Anlagefläche 22 zu liegen kommt. Die verformten Köpfe werden dabei vorzugsweise durch entsprechend geformte (konische) Aufweitungen der Ausnehmungen 33 formschlüssig aufgenommen.

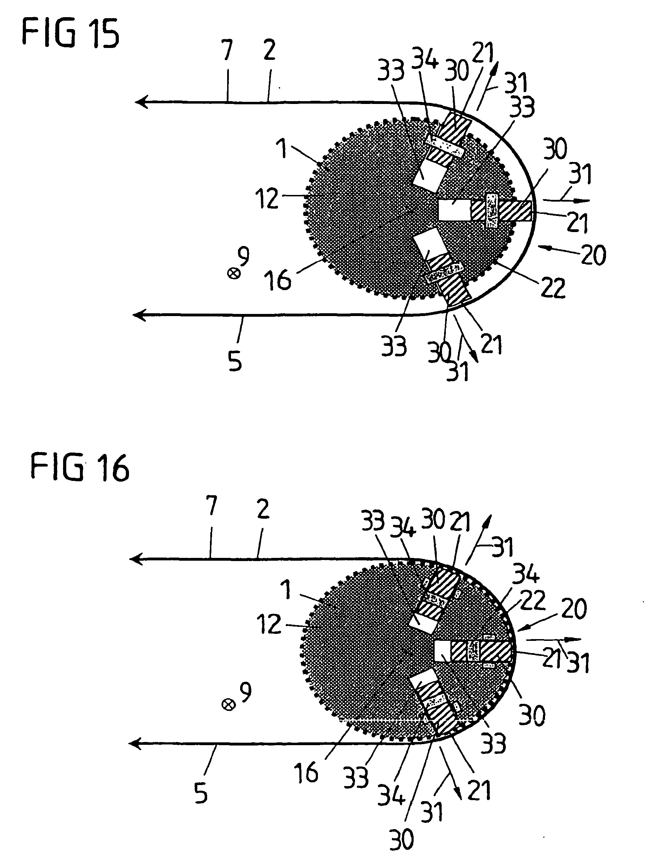

Die Figuren 15 und 16 zeigen eine Abwandlung des in den Figuren 11 und 12 gezeigten Umlenkkörpers 1, bei dem im Unterschied zu den Figuren 11 und 12 die bewegbaren Elemente 30 nicht durch Federelemente 32 in ihren ersten ausgerückten Positionen gehalten werden, sondern durch ein abscherbares Verbindungsmittel 34, das von den bewegbaren Elementen 30 jeweils quer zu deren Bewegungsrichtung 31, die normal zur zweiten Anlagefläche 22 orientiert ist, absteht und in eine Aussparung eingreift, die an einer Wandung der betreffenden Ausnehmungen 33 ausgebildet ist. Übersteigt die am Schultersegment 7 angreifende Kraft die Schwellenkraft drückt der Sicherheitsgurt 2 derart gegen die bewegbaren Elemente 30, dass die Verbindungsmittel 34 von den bewegbaren Elementen 30 abgeschert und die bewegbaren Elemente 30 jeweils in ihre zweiten Position eingerückt werden, so dass der Sicherheitsgurt 2 zur Anlage an die zweiten Anlagefläche 22 gelangt.

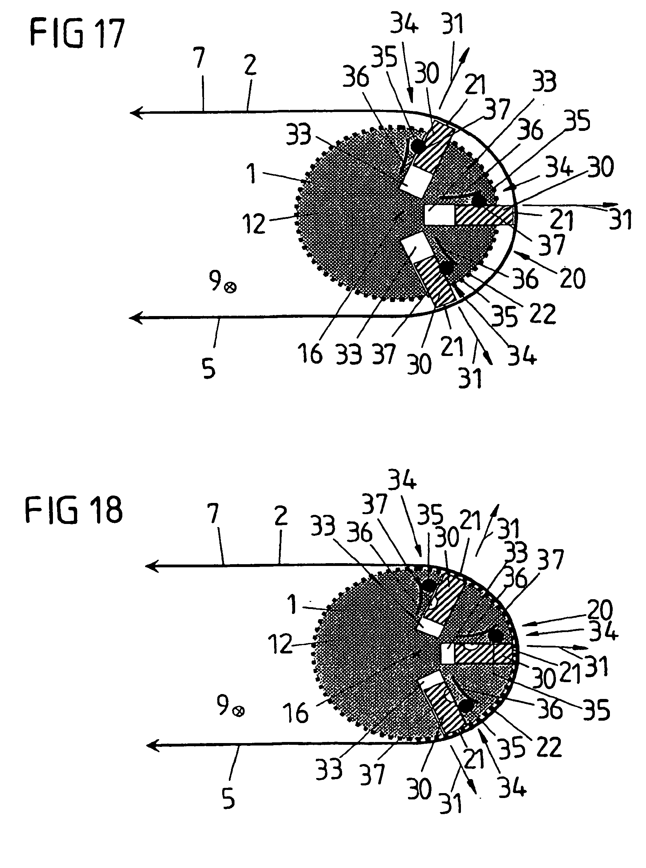

Die Figuren 17 und 18 zeigen eine Abwandlung des in den Figuren 15 und 16 dargestellten Umlenkkörpers 1, bei dem die bewegbaren Elemente 30 jeweils durch ein reversibles, zerstörungsfrei arbeitendes Verbindungsmittels 34 in der ersten Position gehalten werden. Hierzu ist an den bewegbaren Elementen 30 jeweils eine Aussparung 37 vorgesehen, in die eine mittels einer Blattfeder 36 beaufschlagte Kugel 35 quer zur Bewegungsrichtung 31 des jeweiligen bewegbaren Elementes 30 gedrückt wird, so dass der gegen die bewegbaren Elemente 30 drückende Sicherheitsgurt 2 die bewegbaren Elemente 30 erst in deren zweite, eingerückte Position bewegen kann, wenn die am Schultersegment 7 angreifende Kraft die Schwellenkraft übersteigt. Ist dies der Fall, werden die Kugeln 35 entgegen der Kraft der Blattfedern 36 aus den Aussparungen 37 herausgedrückt und die bewegbaren Elemente 30 gelangen in ihre eingerückten zweiten Positionen gemäß Figur 18.

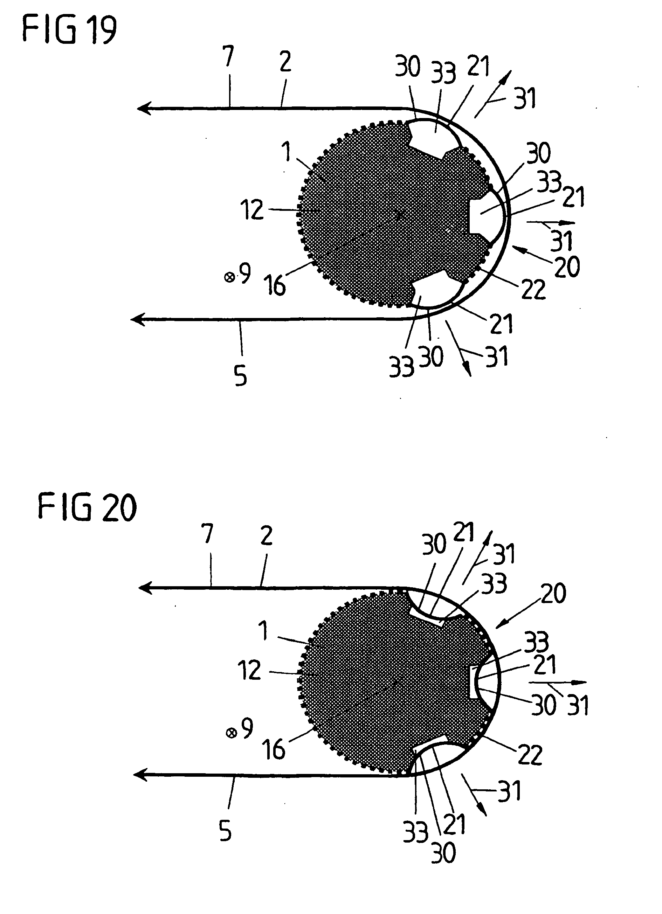

Die Figuren 19 und 20 zeigen eine weitere Ausführungsform eines erfindungsgemäßen Umlenkkörpers 1, bei dem die bewegbaren Elemente 30 als Blattfedern ausgebildet sind. Dabei ist jede Blattfeder 30 über einer ihr zugeordneten Ausnehmung 33 angeordnet, wobei sie sich an einem die betreffende Ausnehmung 33 umlaufenden Randbereich abstützt. In ihrer ersten Position ist die Blattfeder dabei in Richtung auf den den Umlenkkörper 1 umlaufenden Sicherheitsgurt 2 gewölbt, so dass der Sicherheitsgurt 2 lediglich an den Blattfedern 30 anliegt. D.h., die erste Anlagefläche 21 wird durch die dem Sicherheitsgurt 2 zugewandten Oberflächen 21 der Blattfedern 30 gebildet. Übersteigt die am Schultersegment 7 angreifende Kraft die Schwellenkraft, drückt der Sicherheitsgurt 2 so gegen die Blattfedern 30, dass sich deren Wölbung umkehrt und in die jeweilige Ausnehmung 33 hinein steht, so dass der Sicherheitsgurt 2 an der zweiten Anlagefläche 22 zu liegen kommt, die wie gehabt durch die die Ausnehmungen 33 berandende Oberfläche 22 des Umlenkkörpers 1 gebildet wird.

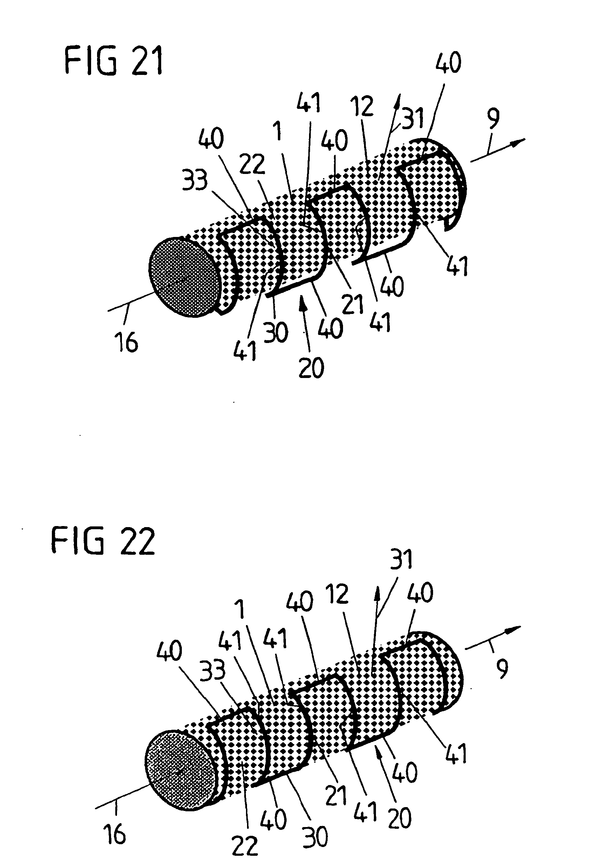

Die Figuren 21 bis 22 zeigen eine Ausführungsform des Umlenkkörpers 1, bei der das bewegbare Element 30 durch eine Drahtklammer gebildet wird, die sich entlang der Oberfläche 22 (zweite Anlagefläche 22) des Umlenkkörpers 1 erstreckt. Die Drahtklammer 30 ist über zwei freie Endabschnitte am Umlenkkörper 1 festgelegt und weist eine dem Sicherheitsgurt 2 zugewandte Oberfläche auf, die die erste Anlagefläche 21 bildet. Die Drahtklammer 30 kann durch den anliegenden Sicherheitsgurt 2 aus ihrer ersten Position, in der der Sicherheitsgurt 2 die darunterliegende zweite Anlagefläche 22 nicht berühren kann, in ihre zweite Position bewegt werden, in der die Drahtklammer 30 in einer entsprechend geformten Ausnehmung 33 des Umlenkkörpers 1 angeordnet ist derart, dass der Sicherheitsgurt 2 an der zweiten Anlagefläche 22 anliegen kann. Das Bewegen der Drahtklammer 30 aus der ersten in die zweite Position erfolgt durch den Sicherheitsgurt 2 in der bereits beschriebenen Weise. Damit der Sicherheitsgurt 2 in der ersten Position der Drahtklammer 30 effektiv auf Abstand zur zweiten Anlagefläche 22 des Umlenkkörpers 1 gehalten werden kann, weist die Drahtklammer 30 quer zur Erstreckungsrichtung 9 verlaufende Abschnitte 41 auf, die durch entlang der Erstreckungsrichtung 9 verlaufende Abschnitte 40 miteinander verbunden sind, so dass sich ein rechteckförmiger Verlauf der Drahtklammer 30 ergibt.

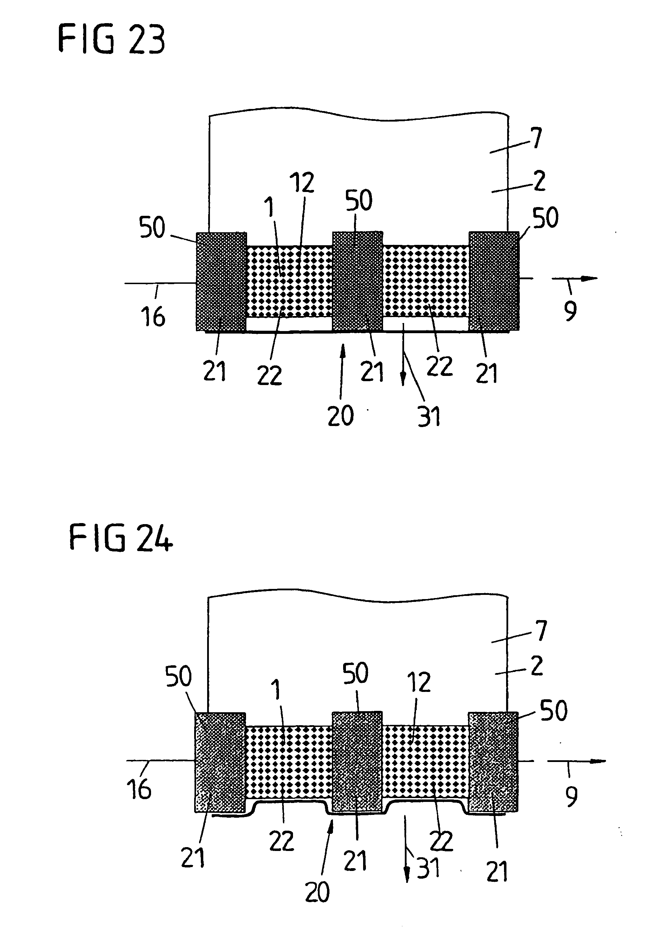

Bei dem Umlenkkörper 1 gemäß den Figuren 23 und 24 wird die erste Anlagefläche 21 durch die dem Sicherheitsgurt 2 zugewandten Oberflächen von Stegen 50 gebildet, die den Umlenkkörper 1 quer zur Erstreckungsrichtung 9 ringförmig umlaufen. Zwischen zwei solchermaßen umlaufenden Stegen 50 erstrecken sich die zweiten Anlageflächen 22, mit ihren höheren Reibungskoeffizienten. Solange die an dem Schultersegment 7 angreifende Kraft die Schwellenkraft nicht übersteigt, liegt der um den Umlenkkörper 1 herum gelegte Sicherheitsgurt 2 lediglich an den besagten Oberflächen 21 der Stege 50 an (erste Anlagefläche 21). Übersteigt jedoch jene Kraft die Schwellenkraft, deformiert sich der Sicherheitsgurt 2 durch die auf ihn wirkenden Kräfte derart, dass er auch zur Anlage an die zweiten Anlageflächen 22 gelangt, die zwischen den Stegen 50 umlaufen (vgl. Figur 24).

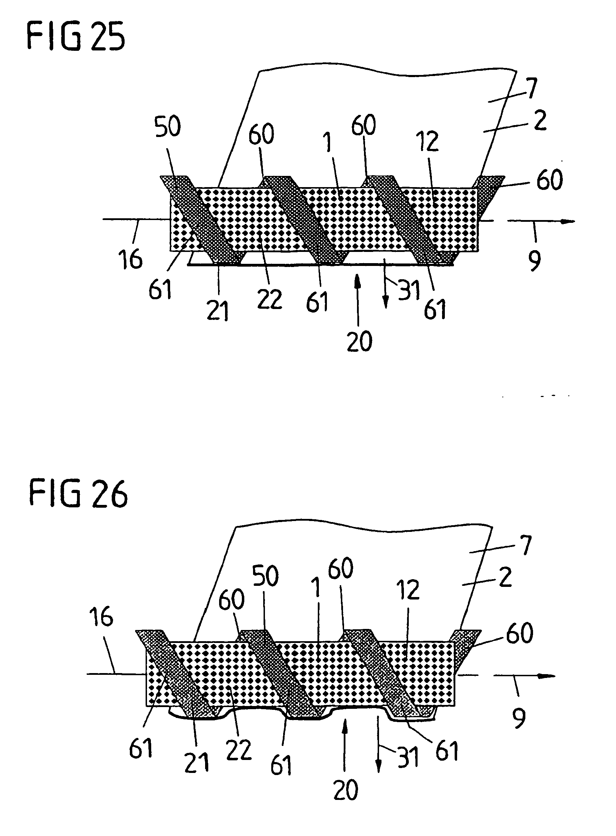

Die Figuren 25 und 26 zeigen eine Abwandlung des in den Figuren 23 und 24 gezeigten Umlenkkörpers 1 bei der der Steg 50 im Unterschied zu den Figuren 23 und 24 spiralförmig am Umlenkkörper 1 umläuft. In gleicher Weise umläuft deshalb die tieferliegende zweite Anlagefläche 22 spiralförmig am Umlenkkörper 1. Dies bewirkt, dass es Abschnitte 60 der ersten Anlagefläche 21 gibt, die entlang der Gurtverlaufsrichtung des abgehenden Schultersegmentes 7 orientiert sind und gegenüberliegende zweite Abschnitte 61, die entlang der Gurtverlaufsrichtung des vom Umlenkkörper 1 abgehenden Beckensegmentes 5 orientiert sind. Auf diese Weise wird die Anlage des jeweiligen Segmentes 7, 5 an der zweiten Anlagefläche 22 optimiert.

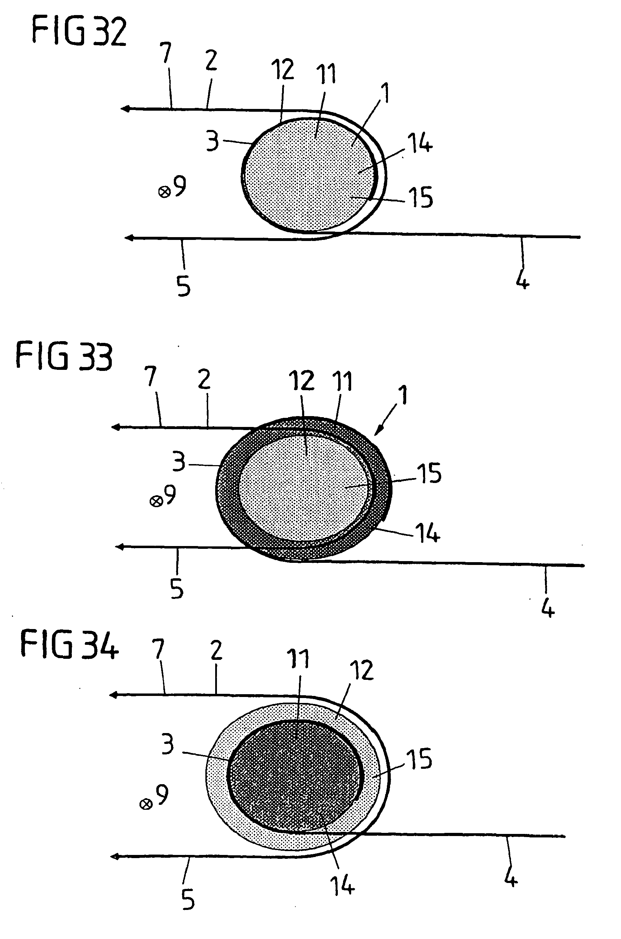

Um die durch den Sicherheitsgurt 2 auf den Umlenkkörper 1 bzw. die längs erstreckten Elemente 3 ausübbare Kraft zu beeinflussen, kann der mittlerer Abschnitt 12 des Umlenkkörpers 1, um den der Sicherheitsgurt 2 herum gelegt ist, gemäß Figur 34 im Querschnitt einen größeren Durchmesser bzw. Radius erhalten als die beiden Randabschnitte 11, 13 des Umlenkkörpers 1. Natürlich ist es auch möglich die Durchmesser der Endabschnitte 11, 13 und des mittleren Abschnittes 12 gleich groß zu halten (Figur 32), oder aber den Durchmesser des mittleren Abschnittes 12 gegenüber dem Durchmesser der Endabschnitte 11, 13 abzusenken (Figur 33). Im Fall der in der Figur 34 dargestellten Situation bedeutet dies, dass eine am Schultersegment 7 angreifende (das Schultersegment 7 spannende) Kraft eine Rotation der Umlenkrolle 1 bewirkt, sofern die besagte Schwellenkraft überschritten wird, wohingegen eine am Beckensegment 5 angreifende und das Beckensegment 5 spannende Kraft einer solchen Rotation entgegen wirkt bzw. in die Auslegung der Kraftverhältnisse zur Begrenzung der am Schultersegment angreifenden Kräfte miteinbezogen werden kann. Damit ist es möglich, auf die Verwendung zusätzlicher Energieaufnahmeeinrichtungen zu verzichten, da die Begrenzung der am Schultersegment angreifenden Kraft allein über das Abwickeln der längs erstreckten Elemente 3 und die am Beckensegment 5 angreifenden Kraft realisiert werden kann. Da die resultierende Schultergurtkraft von der Beckengurtkraft abhängt und diese von der Insassengröße, ist bei einer derartigen Anordnung eine Anpassung der Rückhaltung am Schultersegment 7 für den jeweiligen Insassen möglich bzw. ergibt sich selbstadaptiv. Ein weiterer Vorteil liegt darin, dass bedingt durch den Hebelarm des Beckensegmentes 5 bezüglich des Abrollpunktes MP die Rotation der Umlenkrolle 1 in eine zusätzliche Straffung des Beckensegmentes 5 umgesetzt wird.

Im Fall der Figur 32 kann lediglich die am Schultersegment 7 angreifende Kraft eine Rotation der Umlenkrolle 1 (unter Abwickeln der längs erstreckten Elemente 3) bewirken, wohingegen bei der in der Figur 33 dargestellten Situation sowohl die am Schultersegment 7 angreifende Kraft als auch die am Beckensegment 5 angreifende Kraft eine Rotation der Umlenkrolle 1 bewirken kann.

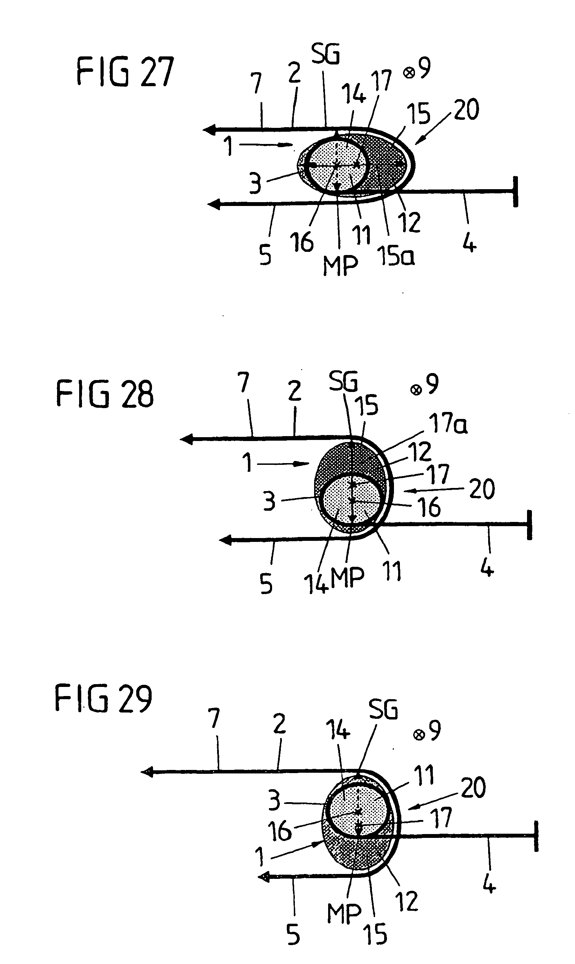

Des Weiteren besteht die Möglichkeit gemäß den Figuren 27 bis 29 die auf die längs erstreckten Elemente 3 ausgeübten Kräfte weg- bzw. zeitabhängig zu variieren, indem der mittlere Abschnitt 12 eine Ausformung erhält, die von der kreiszylindersymmetrie bezüglich der Zylinder- oder Rotationsachse 16 abweicht. Erhält der mittlere Abschnitt 12 beispielweise einen länglichen Querschnitt (z.B. ellipsenförmig), weist der mittlere Abschnitt 12 je nach Winkellage einen unterschiedlich langen Hebelarm auf, dessen Länge durch den Abstand zwischen demjenigen Punkt SG, von dem (im Querschnitt betrachtet) das Schultersegment 7 vom mittleren Abschnitt 12 des Umlenkkörpers 1 abgeht und demjenigen Punkt MP, über den die Endabschnitte 11, 13 (im Querschnitt betrachtet) abrollen, bestimmt wird

Dies kann auch dadurch bewirkt werden, dass der mittlere Abschnitt 12 exzentrisch zur Zylinderachse 16 angeordnet wird.

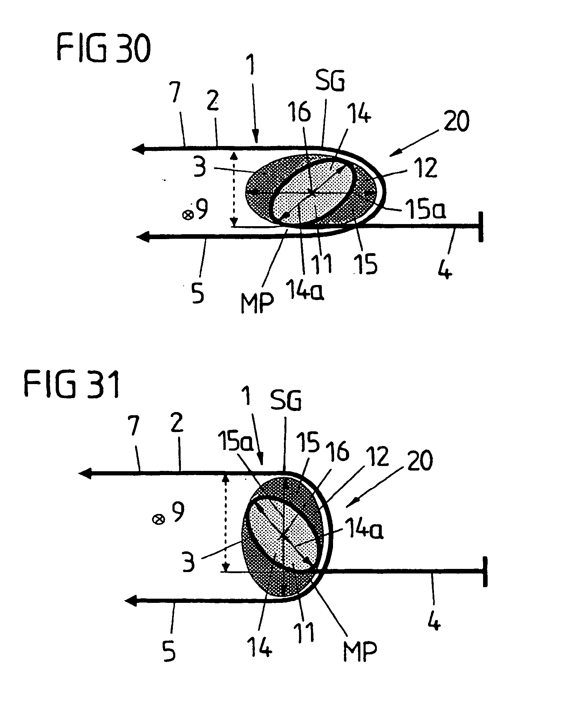

Des Weiteren ist in der Ausführungsform gemäß den Figuren 30 und 31 vorgesehen, dass sowohl der mittlere Abschnitt 12 als auch die beiden Endabschnitte 11, 13 jeweils eine längs erstreckte Querschnittsfläche 14, 15 aufweisen, die sich jeweils entlang einer Längsachse 14a, 15a längs erstrecken, wobei die Längsachsen 14a der Querschnitte 14 der Endabschnitte 11, 13 jeweils einen (nicht verschwindenden) Winkel mit der Längsachse 15a des Querschnittes 15 des mittleren Abschnittes 12 bilden. Auch auf diese Weise wird der vorstehend beschriebene Abstand SG-MP und damit der Kraftverlauf beim Abwickeln der längs erstreckten Elemente 3 weg- bzw. zeitabhängig variiert.

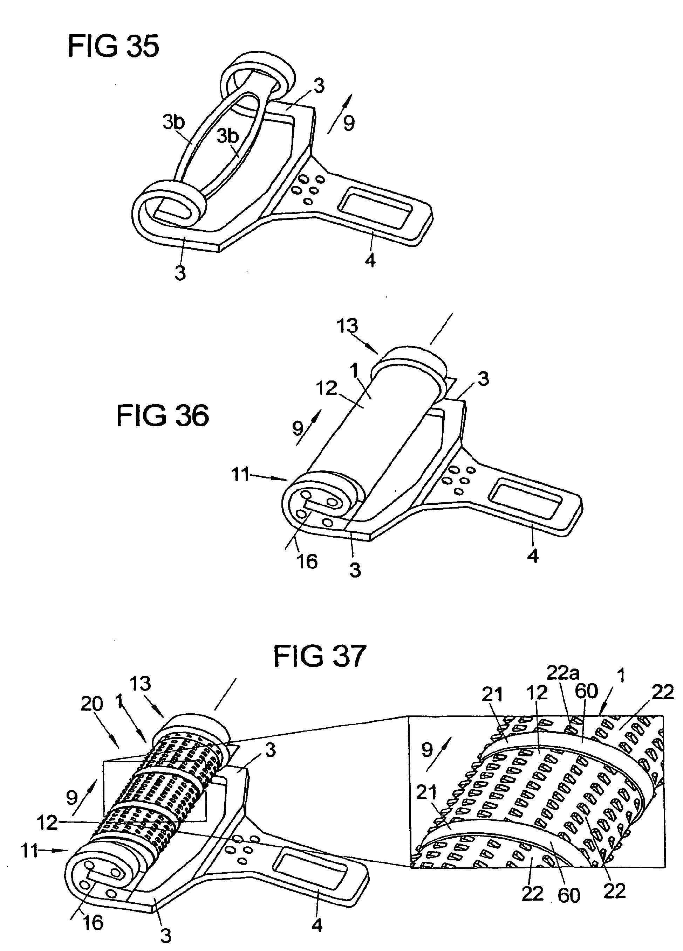

Die Figuren 35 bis 37 zeigen eine weitere Ausführungsform einer erfindungsgemäßen Schlossumlenkeinrichtung, bei der die Schlosszunge 4 einstückig an die beiden längs erstreckten Elemente 3 angeformt ist. Die Schlosszunge 4 wird zusammen mit den längs erstreckten Elementen 3 als einheitliches Teil aus einem Metallstück ausgestanzt und anschließend entsprechend gerollt und gebogen. Die beiden längs erstreckten Elemente 3 sind durch Verstärkungsstreben 3b miteinander verbunden, die entlang der Erstreckungsrichtung 9 erstreckt sind. Die Verstärkungsstreben 3b verhindern ein Aufspreizen der längs erstreckten Elemente 3 beim Einleiten der Gurtkräfte in die Schlossumlenkeinrichtung. Das Vorsehen von zwei Verstärkungsstreben 3b dient der besseren Übertragung des Drehmomentes, welches über die am Schultersegment 7 angreifende Kraft in den Umlenkkörper 1 eingeleitet wird. Um den Umlenkkörper 1 herzustellen, wird das verformte Stanzteil (Schlosszunge 4 und daran ausgebildete längs erstreckte Elemente 3) in eine Spritzgussmaschine eingelegt und um die Verstärkungsstreben 3b herum mit Kunststoff umspritzt. Der Anlagebereich 20 gemäß Figuren 25, 26 und 37 kann ebenfalls beim Umspritzen ausgebildet werden und ist dann einstückig an die Umlenkrolle 1 angeformt. Es ist auch möglich, den Anlagebereich 20 aus anderen Materialen, insbesondere Metall, auszubilden und nachträglich auf die Umlenkrolle 1 aufzubringen. Der erhöhte Reibungskoeffizient der zweiten Anlagefläche 22 wird bei dem in den Figuren 35 bis 37 dargestellten Ausführungsbeispiel vorzugsweise durch eine Strukturierung der zweiten Anlagefläche 22 erzeugt (vgl. Figur 37). Hierzu sind an der zweiten Anlagefläche Erhebungen 22a ausgebildet, die in einem senkrecht zur Erstreckungsrichtung 9 verlaufenden Querschnitt zwei spitzwinklig aufeinander zulaufende Seiten aufweisen, die in Bezug auf eine Normale der zweiten Anlagefläche jedoch eine unterschiedliche Steigung aufweisen können, d.h., die die Erhebungen 22a sind richtungsabhängig ausgebildet, und zwar derart, dass bei einer Relativbewegung zwischen Umlenkkörper 1 und Sicherheitsgurt 2 infolge einer über das Beckensegment 5 eingeleiteten Kraft ein größerer Widerstand entgegengesetzt wird als bei einer über das Schultersegment 7 eingeleiteten Kraft. Vorzugsweise sind die Spitzen der Erhebungen abgeflacht, um den Sicherheitsgurt 2 nicht zu sehr zu beanspruchen.

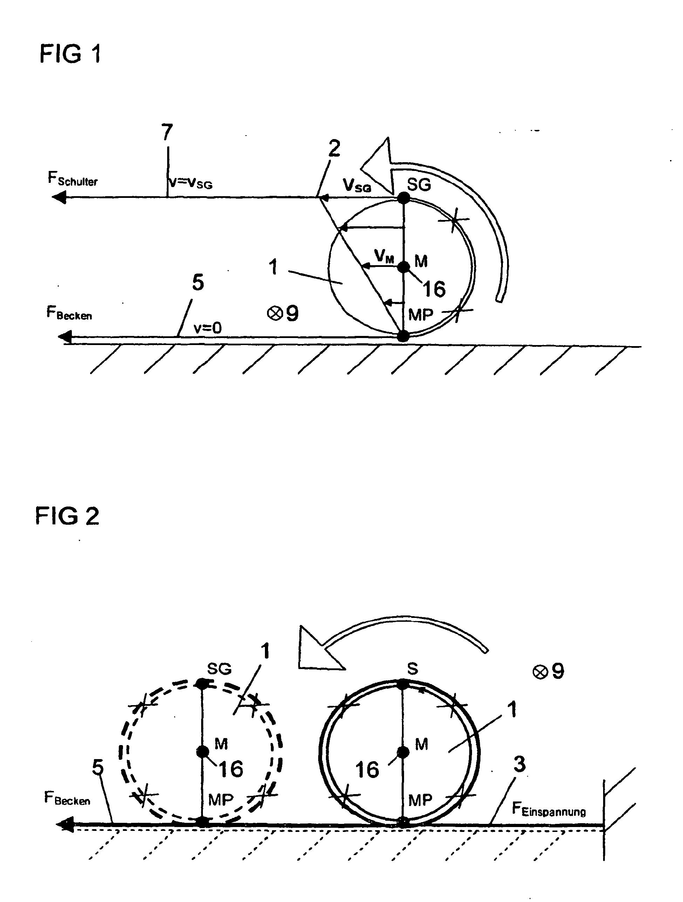

Nachfolgend soll anhand der Figuren 1 bis 6 noch einmal das der Erfindung zugrunde liegende Prinzip verdeutlicht werden.

Das zentrale Element dieses Prinzips ist der Umlenkkörper 1, der vorzugsweise die Form einer Umlenkrolle aufweist, die zwei schaltbare Zustände annehmen kann. Im normalen Gebrauch läuft der Sicherheitsgurt 2 frei um die Umlenkrolle 1 herum, was einen niedrigen Reibwert voraussetzt. Bei einem Unfall wird jedoch diese freie Umlaufbewegung unterbunden, entweder durch Reibschluss mit einem hohen Reibwert oder durch einen Formschluss. Auf diese Weise bilden die Umlenkrolle 1 und der Sicherheitsgurt 2 eine Einheit im Bereich der Berührung und unterbinden hiermit jegliche Relativbewegung zueinander. Wie die daraus resultierende Kinematik im Einzelnen funktioniert, wird nachfolgend erläutert.

Die Umlenkrolle 1 ist gemäß Figur 1 in der Lage, auf der gedachten Ebene des Beckensegmentes 5 abzurollen. Bei dieser Bewegung befindet sich der Momentanpol MP auf jener Ebene, so dass die momentane Geschwindigkeit dieses Punktes verschwindet. Aufgrund der Tatsache, dass keine relative Bewegung zwischen dem Beckensegment 5 und der Umlenkrolle 1 im Bereich der Kontaktstelle stattfinden kann, ist die momentane Geschwindigkeit des Beckensegmentes 5 ebenfalls gleich Null (der Punkt "MP" liegt auf dem Beckensegment 5). Die Geschwindigkeit in Richtung der Bewegung nimmt mit dem Abstand von der Abrollebene linear zu und erreicht ihr Maximum $V_{SG}$ im höchsten Punkt SG, der gleichzeitig der Umlenkrolle 1 und dem Schultergurt angehört. Dieser Punkt SG bewegt sich dabei mit der doppelten Geschwindigkeit $2*v_M$ des Mittelpunktes M der Umlenkrolle 1. Deshalb ist nach einer definierten Verschiebung des Mittelpunktes M um s[mm], der Punkt SG um einen Verschiebeweg von 2*s[mm] gewandert. Im Gegenteil dazu wurde der Punkt MP kumuliert nicht verschoben. Durch diese einfache kinematische Beziehung lässt sich eine Vorrichtung konstruieren, die das Beckensegment 5 trotz beweglicher Elemente nicht nachlässt (entspannt) und das Schultersegment 7 definiert entlastet. Wichtig ist hierbei die Unterbindung der Relativbewegung im Kontaktbereich.

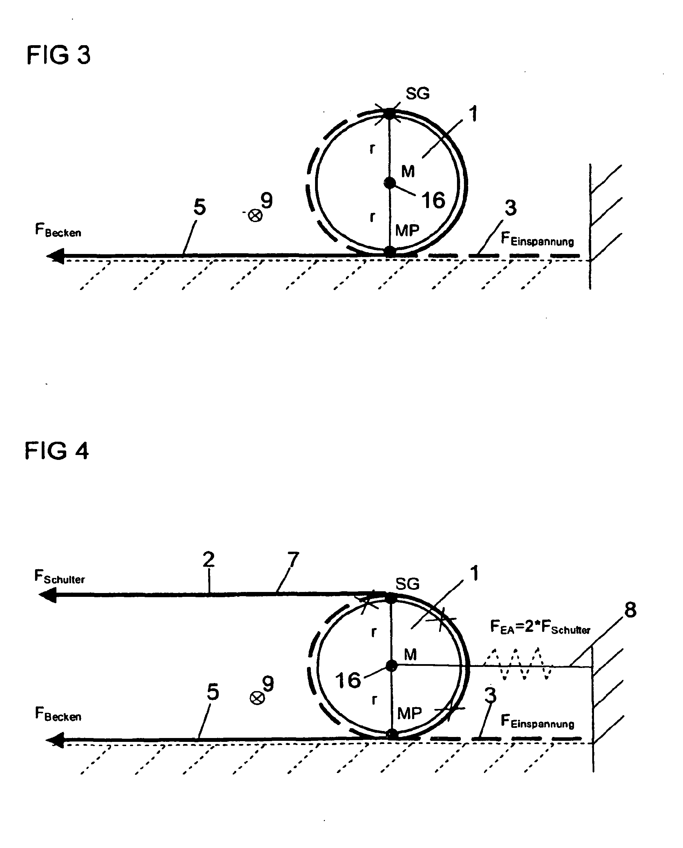

Allerdings wird vorliegend keine Abrollebene realisiert, sondern die technischen Prinzipien der Seiltheorie, insbesondere der einfachen Umschlingung einer Rolle durch ein Seil 2 ausgenutzt, wie anhand der Figuren 2 und 3 dargestellt werden soll.

Gemäß den Figuren 2 und 3 umschlingt das Seil 2 (bzw. der Sicherheitsgurt 2) vollständig die Umlenkrolle 1 und wird an einem Ende eingespannt. An dem anderen Ende wirkt weiter eine Kraft $F_{Becken}$. Unabhängig von der Größe dieser Kraft wird keine Bewegung der Umlenkrolle 1 induziert. Diese Kraft wirkt sich nur auf die Pressung zwischen der Umlenkrolle 1 und dem Seil 2 entlang der Umschlingung aus und wird vollständig durch die Einspannung abgeleitet. Damit folgt das Kräfteverhältnis:

$$F_{Becken} = F_{Einspannung}$$

Somit befindet sich das System in einem quasi-stabilen Zustand. Der Grund hierfür liegt in der Tatsache, dass die Umlenkrolle 1 jede beliebige Position entlang der Abrollebene annehmen kann, ohne den Kraftfluss zu verändern. Das System ist in sich verspannt und trotzdem beweglich. Wird das umschlingende Seil 2 entlang der Umschlingung getrennt und die neuen Seilenden mit der Umlenkrolle 1 fest verbunden, weist das System die gleichen Eigenschaften wie bei einem vollständigen Seil 2 auf.

Ausgehend von diesen Überlegungen ist es möglich, das System noch zu erweitern und zu modifizieren. Hierzu wird gemäß Figur 4 eine weitere Kraft $F_{Schulter}$ am oberen Punkt SG eingeführt, wie auch eine Ableitung dieser Kraft über den Punkt M durch ein Energieaufnahmeelement (Deformationselement 8). Die volle Umschlingung wird unterbrochen und durch einen Kraft- oder Formschluss des Seils 2 mit der Umlenkrolle 1 simuliert. Dadurch ist die unterbundene Relativbewegung zwischen Umlenkrolle 1 und Sicherheitsgurt 2 (Seil 2) wieder gewährleistet. Das System sieht dann folgendermaßen aus:

Bei allen möglichen Kräfteverteilungen ergibt sich ein Gleichgewicht. Die Summe der horizontalen Kräfte ist dabei gleich Null:

$$F_{Schulter} + F_{Becken} - F_{EA} - F_{Einspannung} = 0$$

Das Momentengleichgewicht um Punkt MP ergibt:

$$F_{Schulter}*2*r = F_{EA}*r$$

$$F_{Schulter}*2 = F_{EA}$$

Somit ergibt sich:

$$F_{Einspannung} = F_{Becken} - F_{Schulter},$$

d.h., ein definierter Kraftfluss, der unabhängig von der Position der Umlenkrolle 1 ist. Beim Einbau eines Energieaufnahmeelementes (Deformationselement 8), beispielsweise am Punkt M, welches mit der Einspannung fest verbunden wird, ist eine Begrenzung der Kraft $F_{Schulter}$ möglich. Solange die Kraft $2*F_{Schulter}$ die Verformungskraft $F_{EA}$ nicht überschreitet, stellt sich ein Gleichgewicht des Systems ein und die Kräfte fließen vollständig in die Einspannung ein. Bei Überschreitung der voreingestellten Verformungskraft $F_{EA}$, beispielsweise 6kN, stellt sich eine Kraft von $F_{Schulter}$=3kN am Punkt SG ein und die Umlenkrolle 1 setzt sich in Bewegung. Dadurch, dass der Kraftfluss zwischen $F_{Becken}$ und $F_{Einspannung}$, wie bereits beschrieben, bestehen bleibt, kann die Beckensegmentkraft vollständig abgeleitet werden, die Beckensegmentbewegung unterbunden werden und die Schultergurtkraft durch die voreingestellte Kraft $F_{EA}$ begrenzt werden.

Um die definierte Bewegung der Umlenkrolle 1 festzulegen, werden vorzugsweise gemäß Figur 5 längs erstreckte Elemente 3 in Form von Flachbändern, vorzugsweise aus Blech, eingesetzt. Diese Blechelemente werden in geeigneter Weise mit der Schlosszunge 4 verbunden und verlaufen die Mantelfläche der Umlenkrolle 1 entlang, jeweils links und rechts neben dem umgelenkten Sicherheitsgurt 2. An den Enden gehen sie eine feste Verbindung mit der Umlenkrolle 1 ein. Auf diese Weise ist es möglich, einen definierten Abrollweg festzulegen, welcher nach dem Abrollvorgang nicht überschritten wird. In diesem Fall dienen die abgerollten längs erstreckten Elemente 3 als Verbindungsstege zwischen Umlenkrolle 1 und Schlosszunge 4. Die Energieaufnahme geschieht ggf. zusätzlich durch die Dehnung von Deformationselementen 8. Andere Energieaufnahmeprinzipien, welche umgesetzt werden können, sind das Ausziehen von Stiften, Umlenkung und Biegedeformation von Elementen, reiner Zug sowie das Abscheren von Laschen (siehe oben).

Bei der Umlenkrolle 1 gemäß Figur 6, die mittels eines Stiftes 8 mit der Schlosszunge 4 verbunden ist, bewirkt eine Abrollbewegung der Umlenkrolle 1 in Richtung der Schultergurtkraft um den Betrag x einen Auszug des Stiftes 8 um den gleichen Betrag x, da sich beide auf den Punkt M beziehen.

Wenn jedoch der Stift 8 an einer anderen Stelle angebracht wird, beispielsweise am Punkt SG (gestrichelte Linie), dann wandert der Punkt SG um den Betrag 2*x bei einer Abrollbewegung der Umlenkrolle 1 um x. Diese Geometriemerkmale übertragen sich auf die notwendigen Begrenzungskräfte, die der Stift 8 umsetzen muss. Im ersten Fall handelt es sich dabei um die doppelte Schultergurtkraft, im zweiten Fall um die einfache Schultergurtkraft, jedoch bei doppeltem Weg. Energetisch betrachtet ergeben beide Fälle die gleiche umgesetzte Deformationsenergie.

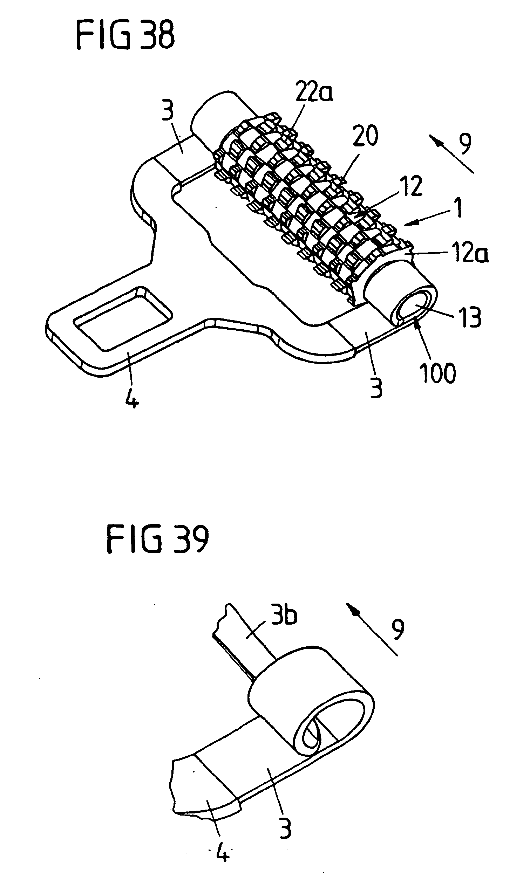

Figur 38 zeigt eine Schlossumlenkeinrichtung nach Art der Figur 5, wobei im Unterschied zur Figur 5 keine Deformationselemente 8 vorgesehen sind. Des Weiteren besteht der Umlenkkörper 1 aus einem ersten Teil 12 und einem zweiten Teil 100, wobei das erste Teil 12 einen mittleren Abschnitt des Umlenkkörpers 1 bildet, an dem ein Anlagebereich 20 gemäß Figur 5 ausgebildet ist. Der besagte erste Teil 12 ist als eine Umspritzung des zweiten Teils 100 ausgebildet, insbesondere aus einem Kunststoff, die den zweiten Teil formschlüssig umgibt.

Der zweite Teil 100 des Umlenkkörpers erstreckt sich entlang der Erstreckungsrichtung 9 des Umlenkkörpers und weist zwei freie Endabschnitte 11, 13 auf, die sich entlang der Erstreckungsrichtung 9 gegenüberliegen und aus dem ersten Teil 12 herausstehen. Dabei stehen die beiden Endabschnitte jeweils entlang bzw. entgegen der Erstreckungsrichtung 9 von je einer Stirnseite 12a, 12b des ersten Teils 12 des Umlenkkörpers 1 ab.

Der Anlagebereich 20 ist als eine strukturierte Oberfläche ausgeformt, die eine Vielzahl von Erhebungen 22a aufweist, die entsprechend den Erhebungen 22a der Figur 37 in einem senkrecht zur Erstreckungsrichtung 9 verlaufenden Querschnitt zwei spitzwinklig aufeinander zulaufende Seiten aufweisen, die in Bezug auf eine Normale der zweiten Anlagefläche jedoch eine unterschiedliche Steigung aufweisen, d.h., die Erhebungen 22a sind richtungsabhängig ausgebildet, und zwar derart, dass bei einer Relativbewegung zwischen Umlenkkörper 1 und Sicherheitsgurt 2 infolge einer über das Beckensegment 5 eingeleiteten Kraft ein größerer Widerstand entgegengesetzt wird als bei einer über das Schultersegment 7 eingeleiteten Kraft.

Die Figur 39 zeigt in einer perspektivischen, ausschnitthaften Darstellung ein Detail der Figur 38, und zwar ein von der Schlosszunge 4 abgehendes längs erstrecktes Element 3. Dieses weist einen Endbereich auf, über den es mit der Schlosszunge verbunden ist, so wie einen damit verbunden, entlang der Erstreckungsrichtung 9 erstreckten Verbindungsabschnitt 3b, über den das längs erstreckte Element 3 mit einem weiteren längserstreckten Element 3 verbunden ist, das bezügliche einer senkrecht zur Erstreckungsrichtung 9 verlaufenden Ebene spiegelsymmetrisch zu dem einen längs erstreckten Element 3 ausgebildet ist. Die beiden längs erstreckten Elemente gemäß den Figuren umgreifen die besagten Endabschnitte 11, 13 des zweiten Teils 100 um jeweils 360°. Die beiden längs erstreckten Elemente 3 können über ihren jeweiligen Endbereich einstückig an die Schlosszunge 4 angeformt sein oder an der Schlosszunge 4 mittels einer sonstigen Verbindung (Schweißverbindung, Nietverbindung, Schraubverbindung, Klebeverbindung etc.) festgelegt sein.

Weiterhin ist der Verbindungsabschnitt 3b ebenfalls vom ersten Teil 12 des Umlenkkörpers 1 umgeben. Dabei kann der Verbindungsabschnitt 3b in der gleichen Weise wie das zweite Teil 100 des Umlenkkörpers durch Umspritzen im ersten Teil 100 formschlüssig eingeschlossen werden. Dabei kann der Verbindungsabschnitt 3b am zweiten Teil 100 anliegen.

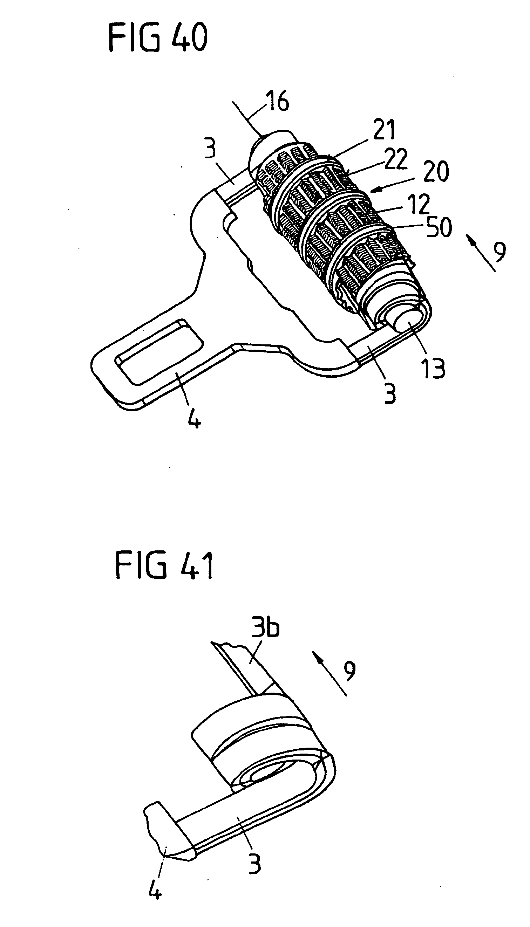

Figur 40 zeigt im Zusammenhang mit der Figur 41 eine Abwandlung der in den Figuren 38 und 39 gezeigten Schlossumlenkeinrichtung, bei der im Unterschied zu den Figuren 38 und 39 der Anlagebereich 20 wie anhand der Figuren 25 und 26 beschrieben ausgebildet ist, wobei die Strukturierung der zweiten Anlagefläche 22 des Anlagebereiches 20 entsprechend der Figur 37 ausgebildet ist.

Weiterhin sind im Unterschied zu den Figuren 38 und 39 die längs erstreckten Elemente 3 jeweils spiralförmig um den jeweils zugeordneten freien Endabschnitt 11, 13 des zweiten Teils 100 des Umlenkkörpers 1 herumgewickelt, wobei die längs erstreckten Elemente 3 vorzugsweise jeweils zweimal um den zugeordneten freien Endabschnitt 3 herumgelegt sind, Die spiralförmige Umwicklung ermöglicht eine größere Abrolllänge der längs erstreckten Elemente 3 vom Umlenkkörper 1. Das bedeutet, dass die Begrenzung der am Schultersegment 7 angreifenden Kraft und damit der Energieabbau über eine größere Wegstrecke realisiert werden kann und deshalb ein niedrigeres Kraftniveau einstellbar ist.

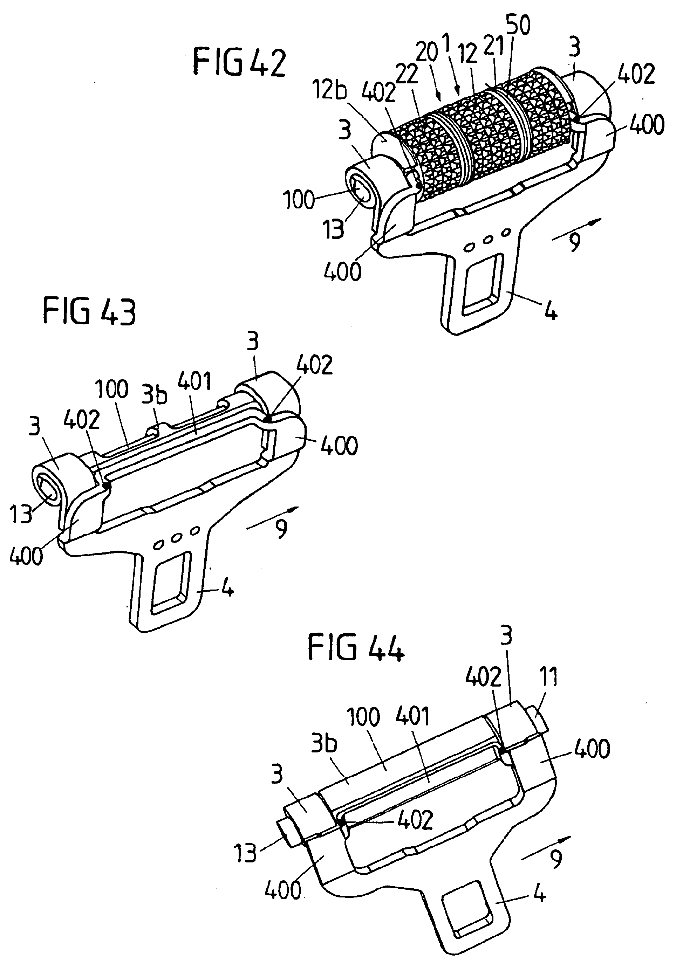

Die Figur 42 zeigt im Zusammenhang mit der Figur 43 eine weitere Ausführungsform einer erfindungsgemäßen Schlossumlenkeinrichtung nach Art der Figuren 38 und 39, bei der im Unterschied zu der in den Figuren 38 und 39 gezeigten Schlossumlenkeinrichtung der Anlagebereich 20 entsprechend den Figuren 23 und 24 ausgebildet ist.

Weiterhin weist die in den Figuren 42 und 43 dargestellte Schlossumlenkeinrichtung zwei Befestigungsbereiche 400 auf, die jeweils einstückig an die Schlosszunge 4 angeformt sind und quer zur Erstreckungsrichtung 9 entlang einer Erstreckungsebene der Schlosszunge von der besagten Schlosszunge 4 abstehen, und zwar entgegen gesetzt zu derjenigen Richtung, entlang der die Schlosszunge 4 in eine Gurtschlossschnalle eingeführt wird.

Die Befestigungsbereiche 400 dienen zum Festlegen der längs erstreckten Elemente 3 an der Schlosszunge 4, wobei die beiden Befestigungsbereiche 400 über einen entlang der Erstreckungsrichtung 9 längs erstreckten Schenkel 401 miteinander verbunden sind, und zwar über Verbindungen 402, die als Sollbruchverbindungen ausgebildet sind. Dabei können die Befestigungsbereiche 400 über jene Verbindungen 402 einstückig an den Schenkel 401 angeformt sein.

Zur Ausbildung einer Aktivierungskontrolle der Schlossumlenkeinrichtung ist der besagte Schenkel 401 drehfest mit dem Umlenkkörper 1 verbunden. Hierzu durchdringt der Schenkel 401 das erste Teil 12 des Umlenkkörpers 1, wobei jener Schenkel 401 vorzugsweise vom ersten Teil 12 umspritzt ist, so dass der Schenkel 401 formschlüssig vom besagten ersten Teil 12 umgeben ist.

Somit kann der Umlenkkörper erst von den längs erstreckten Elementen abgerollt werden, wenn die Verbindungen 402 durch Einleiten einer vordefinierbaren Kraft in das Schultersegment 7 zerstört werden.

Gemäß Figur 43 kann der Verbindungsabschnitt 3b den zweiten Teil 100 des Umlenkkörpers in einer senkrecht zur Erstreckungsrichtung 9 verlaufenden Ebene umgreifen.

Vorzugsweise wird das erste Teil geschaffen, in dem das zweite Teil 100, der Verbindungsabschnitt 3b und der Schenkel 401 mit einem Kunststoff umspritzt werden. Hierbei können mehrere Kunststoffe verwendet werden. Des Weiteren kann der Anlagebereich aus einem Metall ausgebildet werden oder durch eine geeignete Beschichtung der besagten Kunststoffumspritzung.

Die Figur 44 zeigt eine Abwandlung der in den Figuren 42 und 43 gezeigten Schlossumlenkeinrichtung, wobei in der Figur 44 das erste Teil 12 des Umlenkkörpers 1 nicht dargestellt ist. In Unterschied zu den Figuren 42 und 43 bilden bei der Schlossumlenkeinrichtung gemäß Figur 44 die beiden Befestigungsbereiche 400 zusammen mit dem über die Verbindungen 402 mit den Befestigungsbereichen 400 verbundenen Schenkel 401 ein separates Bauteil, wobei dieses Bauteil über die besagten Befestigungsbereiche 400 mit der Schlosszunge 4 verbunden ist, z.B. über eine Schweiß-, Niet-, Schraub- oder Klebeverbindung. Des Weiteren sind die längs erstreckten Elemente 3 über je einen der Befestigungsbereiche 400 mit der Schlosszunge 4 verbunden. Die längs erstreckten Elemente 3 können ebenfalls über eine Schweiß-, Niet-, Schraub- oder Klebeverbindung mit den Befestigungsbereichen verbunden sein.

Bei der Figur 44 ist die Aktivierungskontrolle also durch ein separates Element 400, 402, 401 realisiert.

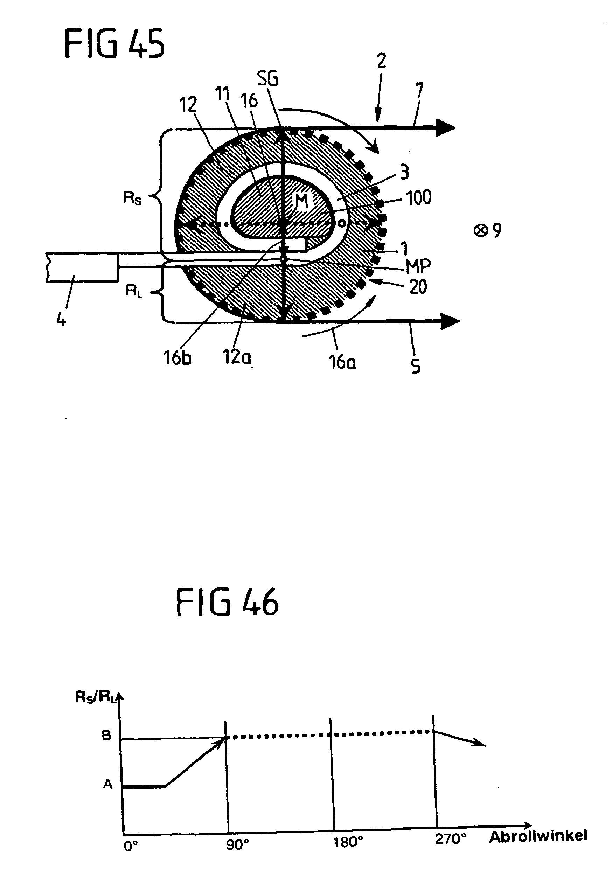

Figur 45 zeigt anhand einer schematischen, ausschnitthaften Schnittdarstellung einer erfindungsgemäßen Schlossumlenkeinrichtung die an dem Umlenkkörper 1 angreifenden Kräfte. Wird in das vom Umlenkkörper 1 abgehende Schultersegment 7 eine Kraft eingeleitet, die entlang des Schultersegmentes wirkt und vom Umlenkelement 1 weg weist, so wird der effektive wirksame Hebelarm $R_S$ ($R_S$ bezeichnet auch die Länge des Hebelarms), der in einer senkrecht zur Erstreckungsrichtung 9 verlaufenden Ebene liegt, durch die Strecke zwischen demjenigen Punkt SG, von dem das Schultersegment vom Umlenkkörper 1 abgeht und demjenigen Punkt MP, über den der Umlenkkörper 1 von den längs erstreckten Elementen 3 abrollt - dies ist derjenige Punkt, von dem ein Endbereich des längs erstreckten Elementes 3 vom zugeordneten Endabschnitt 11, 13 abgeht - gebildet wird.

Eine in dem vom Umlenkkörper 1 abgehenden Beckensegment 5 wirkende Kraft weist einen effektiv wirksamen Hebelarm $R_L$ auf ($R_L$ bezeichnet auch die Länge des Hebelarms), der durch die Strecke zwischen dem Punkt von dem das Beckensegment 5 vom Umlenkkörper 1 abgeht und dem Punkt MP gebildet wird.

Der momentane Abrollpunkt MP verändert während des Abrollens des Umlenkkörpers 1 von den längs erstreckten Elementen 3 seine Position in Bezug auf diesen. Der Punkt MP umläuft den Umlenkkörper 1 in einer (die Zylinderachse 16 bzw. Achse 16) umlaufenden Umfangsrichtung 16a mit einem konstruktiv vorgegebenen Abstand 16b zur besagten (Zylinder)achse 16 bzw. dem Mittelpunkt M. Der besagte Abstand 16b kann dabei während der Abrollbewegung sowohl konstant als auch veränderlich, wie nachfolgend beschrieben, gestaltet werden.

Figur 46 zeigt das Verhältnis $R_S/R_L$ zwischen der Länge $R_S$ des Hebelarms der Schultersegmentkraft 7 und der Länge $R_L$ des Hebelarms der Beckensegmentkraft 5 als Funktion des Abrollwinkels. Der Abrollwinkel beträgt anfänglich 0° und nimmt entsprechend zu, wenn der Umlenkkörper 1 von den längs erstreckten Elementen 3 abgerollt wird. Der Abrollwinkel entspricht also demjenigen Winkel, um den der Umlenkkörper beim Abrollen um seine parallel zur Erstreckungsrichtung verlaufende Zylinderachse 16 bzw. Achse 16 gedreht wird.

Bei einem Abrollwinkel von 0° weist das besagte Verhältnis einen Wert A auf, der kleiner ist als ein Wert B des Verhältnisses bei einem Abrollwinkel in Höhe von 90°. Ausgehend von einem Abrollwinkel von 0° nimmt der Wert des Verhältnisses vorzugsweise monoton zu. Ab einem Abrollwinkel von 90° ist der Wert des besagten Verhältnisses bevorzugt konstant und fällt ab einem Abrollwinkel von 270° vorzugsweise wieder ab.

Das anfänglich größer werdende Verhältnis bedingt, dass das für das Schultersegment kraftbegrenzende Abrollen der Elemente 3 vom Umlenkkörper 1 auch bei steigender Kraft im Beckensegment 5 aufrecht erhalten wird. Die Verhältnisse $R_S/R_L$ bewegen sich vorzugsweise in einem Bereich zwischen 1,3 und 6.

## Patentansprüche

**1.** Schlossumlenkeinrichtung für ein Kraftfahrzeug, mit

- einer Schlosszunge (4) zum Einstecken in eine Schlossschnalle und
- einem mit der Schlosszunge (4) verbundenen Umlenkkörper (1), der dazu ausgebildet ist, einen Sicherheitsgurt (2) in ein Schultersegment (7) und ein Beckensegment (5) zu unterteilen und derart umzulenken, dass die beiden Segmente (7, 5) in unterschiedlichen Richtungen vom Umlenkkörper (1) abgehen,

**dadurch gekennzeichnet, dass**
der Umlenkkörper (1) über zumindest ein längs erstrecktes Element (3) mit der Schlosszunge (4) verbunden ist, das zumindest abschnittsweise um den Umlenkkörper (1) herumgewickelt ist.

**2.** Schlossumlenkeinrichtung nach Anspruch 1, **dadurch gekennzeichnet, dass** das längs erstreckte Element (3) und die Schlosszunge (4) als separate Elemente ausgebildet sind, die miteinander verbunden sind.

**3.** Schlossumlenkeinrichtung nach Anspruch 1 oder 2, **dadurch gekennzeichnet, dass** das mindestens eine längs erstreckte Element (3) durch eine am Schultersegment (7) angreifende Kraft, die eine vorbestimmbare Schwellenkraft übersteigt, vom Umlenkkörper (1) abgewickelt wird, um die resultierende, an dem Schultersegment (7) angreifende Kraft zu begrenzen.

**4.** Schlossumlenkeinrichtung nach einem der vorhergehenden Ansprüche, **dadurch gekennzeichnet, dass** sich der Umlenkkörper (1) entlang einer Erstreckungsrichtung (9) längs erstreckt, wobei insbesondere das mindestens eine längs erstreckte Element (3) quer zur Erstreckungsrichtung (9) des Umlenkkörpers (1) um den Umlenkkörper (1) herumgewickelt ist.

**5.** Schlossumlenkeinrichtung nach Anspruch 4, **dadurch gekennzeichnet, dass** der Umlenkkörper (1) ein erstes und ein zweites Teil (12, 100) aufweist, wobei das erste Teil (12) des Umlenkkörpers (1) das zweite Teil (100) des Umlenkkörpers (1) in einer senkrecht zur Erstreckungsrichtung (9) verlaufenden Ebene umgreift.

6. Schlossumlenkeinrichtung nach den Ansprüchen 4 und 5, **dadurch gekennzeichnet, dass** das zweite Teil (100) zwei freie Endabschnitte (11, 13) aufweist, die entlang der Erstreckungsrichtung (9) einander gegenüberliegen, und dass die beiden freien Endabschnitte (11, 13) an einander entlang der Erstreckungsrichtung (9) abgewandten Stirnseiten (12a, 12b) des ersten Teiles (12) aus dem ersten Teil (12) des Umlenkkörpers (1) herausstehen, wobei insbesondere das mindestens eine längs erstreckte Element (3) quer zur Erstreckungsrichtung (9) des Umlenkkörpers (1) um einen der freien Endabschnitte (11, 13) des Umlenkkörpers (1) herumgewickelt ist.

7. Schlossumlenkeinrichtung nach Anspruch 3 oder einem der Ansprüche 4 bis 6 soweit rückbezogen auf Anspruch 3, **dadurch gekennzeichnet, dass** der Umlenkkörper (1) über ein weiteres längs erstrecktes Element (3) mit der Schlosszunge (4) verbunden ist, und dass das weitere längs erstreckte Element (3) durch eine am Schultersegment (7) angreifende Kraft, die jene Schwellenkraft übersteigt, vom Umlenkkörper (1) abgewickelt wird, um die resultierende, an dem Schultersegment (7) angreifende Kraft zu begrenzen.

8. Schlossumlenkeinrichtung nach Anspruch 7, **gekennzeichnet durch** zwei Befestigungsbereiche (400), wobei die beiden längs erstreckten Elemente (3) über je einen der Befestigungsbereiche (400) an der Schlosszunge (4) festgelegt sind, und wobei jene Befestigungsbereiche (400) über einen Schenkel (401) miteinander verbunden sind, wobei insbesondere der Schenkel (401) einstückig an die Befestigungsbereiche (400) angeformt ist.

9. Schlossumlenkeinrichtung nach Anspruch 8, **dadurch gekennzeichnet, dass** die beiden Befestigungsbereiche (400) jeweils einstückig an die Schlosszunge (4) angeformt sind.

10. Schlossumlenkeinrichtung nach Anspruch 8, **dadurch gekennzeichnet, dass** der Schenkel (401) zusammen mit den Befestigungsbereichen (400) ein separates Element (Bauteil) bildet, das über jene Befestigungsbereiche (400) mit der Schlosszunge (4) und mit den beiden längs erstreckten Elementen (3) verbunden ist.

11. Schlossumlenkeinrichtung nach Anspruch 3 und nach einem der Ansprüche 8 bis 10, **dadurch gekennzeichnet, dass** der Schenkel (401) über je eine durch Krafteinwirkung zerstörbare Verbindung (402) mit den beiden Befestigungsbereichen (400) verbunden ist, wobei die beiden Verbindungen (402) insbesondere so ausgebildet sind, dass sie zerstört werden, wenn eine am Schultersegment (7) angreifende Kraft die vorbestimmbare Schwellenkraft übersteigt.

12. Schlossumlenkeinrichtung nach einem der vorangegangenen Ansprüche, **dadurch gekennzeichnet, dass** der Umlenkkörper (1) einen Anlagebereich (20) zur Anlage des Sicherheitsgurtes (2) am Umlenkkörper (1) aufweist, wobei der Sicherheitsgurt (2) um den Anlagebereich (20) herumgelegt ist.

13. Schlossumlenkeinrichtung nach Anspruch 5 und Anspruch 12, **dadurch gekennzeichnet, dass** der Anlagebereich (20) am ersten Teil (12) des Umlenkkörpers (1) ausgebildet ist.

14. Schlossumlenkeinrichtung nach Anspruch 3 und nach Anspruch 12 oder 13, **dadurch gekennzeichnet, dass** der Anlagebereich (20) dazu ausgebildet ist, derart mit dem Sicherheitsgurt (2) zusammenzuwirken, dass bei einer am Schultersegment (7) angreifenden Kraft, die die vorbestimmbare Schwellenkraft übersteigt, der am Anlagebereich (20) anliegende Sicherheitsgurt (2) den Umlenkkörper (1) zu einer Drehbewegung mitnimmt, so dass das mindestens eine längs erstreckte Element (3) vom Umlenkkörper (1) abgewickelt wird, wobei insbesondere der Anlagebereich (20) dazu ausgebildet ist, derart mit dem Sicherheitsgurt (2) zusammenzuwirken, dass der Umlenkkörper (1) bei einer am Schultersegment (7) angreifenden Kraft, die die Schwellenkraft übersteigt, durch eine erhöhte Reibung zwischen dem Anlagebereich (20) und dem Sicherheitsgurt (2) vom Sicherheitsgurt (2) mitgenommen wird, und dass jene Reibung zwischen dem Anlagenbereich (20) und dem Sicherheitsgurt (2) bei einer am Schultersegment (7) angreifenden Kraft, die geringer ist als jene Schwellenkraft, ein Entlanggleiten des Sicherheitsgurtes (2) am Umlenkkörper (1) erlaubt, ohne dass dieser durch den Sicherheitsgurt (2) mitgenommen wird.

15. Schlossumlenkeinrichtung nach einem der vorhergehenden Ansprüche, **dadurch gekennzeichnet, dass** das Verhältnis ($R_S/R_L$) zwischen der Länge des Hebelarms ($R_S$) einer über das Schultersegment (7) am Umlenkkörper (1) angreifenden Kraft und der Länge des Hebelarms ($R_L$) einer über das Beckensegment (5) am Umlenkkörper (1) angreifenden Kraft, wobei die jeweiligen Längen der Hebelarme ($R_S$, $R_L$) auf einen momentanen Abrollpunkt (MP) des Umlenkkörpers (1) bezogen sind, bei einem nicht abgewickelten längs erstreckten Element (3) kleiner ist, als bei einem zumindest teilweise, insbesondere um 90°, abgewickelten längs erstreckten Element (3), wobei insbesondere das besagte Verhältnis ($R_S/R_L$) Werte im Bereich von einschließlich1,3 bis einschließlich 6 annimmt.

## Claims

1. A buckle device for a motor vehicle, comprising

    - a locking tongue (4) for insertion into a buckle, and
    - a deflecting body (1) connected to the locking tongue (4), which is configured to subdivide a safety belt (2) into a shoulder portion (7) and a lap portion (5) and to deflect said safety belt (2) such that the two portions (7,5) extend away from the deflecting body (1) in different directions,

    **characterized in that**
    the deflecting body (1) is connected to the locking tongue (4) via at least one longitudinally extending element (3), which is at least partially wound around the deflecting body (1).

2. Buckle device according to claim 1, **characterized in that** the longitudinally extending element (3) and the locking tongue (4) are designed as separate elements that are connected to each other.

3. Buckle device according to claim 1 or 2, **characterized in that** the at least one longitudinally extending element (3) is unwound from the deflecting body (1) by a force acting on the shoulder portion (7), which exceeds a predeterminable threshold force, in order to limit the resulting force acting on the shoulder portion (7).

4. Buckle device according to one of the preceding claims, **characterized in that** the deflecting body (1) extends longitudinally along a direction of extension (9), wherein particularly the at least one longitudinally extending element (3) is wound around the deflecting body (1) perpendicular to the direction of extension (9) of the deflecting body (1).

5. Buckle device according to claim 4, **characterized in that** the deflecting body (1) comprises a first and a second part (12, 100), wherein the first part (12) of the deflecting body (1) encloses the second part (100) of the deflecting body (1) in a plane extending perpendicular to the direction of extension (9).

6. Buckle device according to claims 4 and 5, **characterized in that** the second part (100) comprises two free end portions (11, 13), which face each other along the direction of extension (9), and **in that** the two free end portions (11, 13) protrude out of the first part (12) of the deflecting body (1) on front sides (12a, 12b) of the first part (12) facing away along the direction of extension (9), wherein particularly the at least one longitudinally extending element (3) is wound around one of the free end portions (11, 13) of the deflecting body (1) perpendicular to the direction of extension (9) of the deflecting body (1).

7. Buckle device according to claim 3 or one of the claims 4 to 6 when referred back to claim 3, **characterized in that** the deflecting body (1) is connected to the locking tongue (4) via a further longitudinally extending element (3), and **in that** the further longitudinally extending element (3) is unwound from the deflecting body (1) by a force acting on the shoulder portion (7), which exceeds said predeterminable threshold force, in order to limit the resulting force acting on the shoulder portion (7).

8. Buckle device according to claim 7, **characterized by** two fastening regions (400), wherein the two longitudinally extending elements (3) are each fastened via one of the fastening regions (400) to the locking tongue (4), and wherein said fastening regions (400) are connected to each other via a leg (401), wherein particularly the leg (401) is integrally formed with the fastening reagions (400).

9. Buckle device according to claim 8, **characterized in that** the two fastening regions (400) are integrally formed with the locking tongue (4), respectively.

10. Buckle device according to claim 8, **characterized in that** the leg (401) forms a separate element (part) together with the fastening regions (400), which is connected to the locking tongue (4) and the two longitudinally extending elements (3) via said fastening regions (400).

11. Buckle device according to claim 3 and according to one of the claims 8 to 10, **characterized in that** the leg (401) is connected to each of the two fastening regions (400) via a connection (402), respectively, which is destructible by the application of a force, wherein the two connections (402) are particularly designed such that they are destroyed when a force acting on the shoulder portion (7) exceeds the predeterminable treshold force.

12. Buckle device according to one of the preceding claims, **characterized in that** the deflecting body (1) comprises a bearing reagion (20) for the bearing of the safety belt (2) against the deflecting body (1), wherein the safety belt (2) is laid around the bearing region (20).

13. Buckle device according to claim 5 and claim 12, **characterized in that** the bearing region (20) is formed on the first part (12) of the deflecting body (1).

14. Buckle device according to claim 3 and according to claim 12 or 13, **characterized in that** the bearing region (20) is designed to cooperate with the safety belt (2) such that in case of a force acting on the shoulder portion (7) that exceeds the predeterminable threshold force, the safety belt (2) bearing against the bearing region (20) takes along the deflecting body (1) to a rotational movement, so that the at least one longitudinally extending element (3) is unwound from the deflecting body (1), wherein particularly the bearing region (20) is designed to cooperate with the safety belt (2) such that the deflecting body (1), in case of a force acting on the shoulder portion (7), which exceeds the threshold force, is taken along by the safety belt (2) by an increased friction between the bearing region (20) and the safety belt (2), and **in that** said friction between the bearing region (20) and the safety belt (2), in case of a force acting on the shoulder portion (7), which is lower than said threshold force, allows the safety belt (2) to slide along the deflecting body (1) without said deflecting body (1) being taken along by the safety belt (2).

15. Buckle device according to one of the preceding claims, **characterized in that** the ratio ($R_S/R_L$) of the length of the lever arm ($R_S$) of a force acting on the deflecting body (1) via the shoulder portion (7) and the length of the lever arm ($R_L$) of a force acting on the deflecting body (1) via the lap portion (5), wherein the respective lengths of the lever arms ($R_S$, $R_L$) are related to an instantaneous crawling point (MP) of the deflecting body (1), is smaller in case of a longitudinally extending element (3) that is not unwound, than in case of an at least partially, particularly by an amount of 90°, unwound longitudinally extending element (3), wherein particularly said ratio ($R_S/R_L$) lies within the range of 1.3 to 1.6, including 1.3 and 1.6, respectively.

## Revendications

1. Dispositif de déviation de serrure pour un véhicule automobile, comprenant

   - une languette de serrure (4) à enficher dans une boucle de serrure, et
   - un corps de déviation (1) relié à la languette de serrure (4), lequel est réalisé pour subdiviser une ceinture de sécurité (2) en un segment d'épaule (7) et un segment de pelvis (5), et pour dévier la ceinture de sécurité de telle façon que les deux segments (7, 5) partent du corps de déviation (1) dans des directions différentes,

   **caractérisé en ce que**
   le corps de déviation (1) est relié à la languette de serrure (4) via au moins un élément (3) étendu en longueur qui est enroulé autour du corps de déviation (1), au moins par tronçon.

2. Dispositif de déviation de serrure selon la revendication 1, **caractérisé en ce que** l'élément (3) étendu en longueur et la languette de serrure (4) sont réalisés sous forme d'éléments séparés qui sont reliés ensemble.

3. Dispositif de déviation de serrure selon la revendication 1 ou 2, **caractérisé en ce que** ledit au moins un élément (3) étendu en longueur est déroulé depuis le corps de déviation (1) sous une force, attaquant le segment d'épaule (7), qui dépasse une force de seuil prédéterminée, afin de limiter la force résultante attaquant le segment d'épaule (7).

4. Dispositif de déviation de serrure selon l'une des revendications précédentes, **caractérisé en ce que** le corps de déviation (1) s'étend le long d'une direction d'extension (9), et ledit au moins un élément (3) étendu en longueur est enroulé autour du corps de déviation (1) transversalement à la direction d'extension (9) du corps de déviation (1).

5. Dispositif de déviation de serrure selon la revendication 4, **caractérisé en ce que** le corps de déviation (1) comprend une première partie et une seconde partie (12, 100), la première partie (12) du corps de déviation (1) entourant la seconde partie (100) du corps de déviation (1) dans un plan perpendiculaire à la direction d'extension (9).

6. Dispositif de déviation de serrure selon les revendications 4 et 5, **caractérisé en ce que** la seconde partie (100) comporte deux tronçons d'extrémité libre (11, 13) qui sont opposés l'un à l'autre le long de la direction d'extension (9), et **en ce que** les deux tronçons d'extrémité libre (11, 13) dépassent hors de la première partie (12) du corps de déviation (1), au niveau des faces frontales (12a, 12b) de la première partie (12), détournées l'une de l'autre le long de la direction d'extension (9), et en particulier ledit au moins un élément (3) étendu en longueur est enroulé autour de l'un des tronçons d'extrémité libre (11, 13) du corps de déviation (1) transversalement à la direction d'extension (9) du corps de déviation (1).

**7.** Dispositif de déviation de serrure selon la revendication 3, ou l'une des revendications 4 à 6 prise en dépendance de la revendication 3, **caractérisé en ce que** le corps de déviation (1) est relié à la languette de serrure (4) via un autre élément (3) étendu en longueur, et **en ce que** l'autre élément (3) étendu en longueur est déroulé depuis le corps de déviation (1) sous une force, attaquant le segment d'épaule (7) qui dépasse la force de seuil, afin de limiter la force résultante attaquant le segment d'épaule (7).

**8.** Dispositif de déviation de serrure selon la revendication 7, **caractérisé par** deux régions de fixation (400), les deux éléments (3) étendus en longueur étant immobilisés chacun via l'une des régions de fixation (400) sur la languette de serrure (4), et lesdites zones de fixation (400) sont reliées l'une à l'autre via une branche (401), ladite branche (401) étant en particulier conformée d'une seule pièce sur les régions de fixation (400).

**9.** Dispositif de déviation de serrure selon la revendication 8, **caractérisé en ce que** les deux régions de fixation (400) sont respectivement conformées d'une seule pièce sur la languette de serrure (4).

**10.** Dispositif de déviation de serrure selon la revendication 8, **caractérisé en ce que** la branche (401) forme, conjointement avec les régions de fixation (400) un élément (composant) séparé, qui est relié via lesdites régions de fixation (400) à la languette de serrure (4) et aux deux éléments (3) étendus en longueur.

**11.** Dispositif de déviation de serrure selon la revendication 3 et selon l'une des revendications 8 à 10, **caractérisé en ce que** la branche (401) est reliée aux deux régions de fixation (400) respectivement via une liaison (402) capable d'être détruite sous l'effet d'une force, les deux liaisons (402) étant en particulier réalisées de telle façon qu'elles sont détruites quand une force attaquant le segment d'épaule (7) dépasse la force de seuil prédéterminée.

**12.** Dispositif de déviation de serrure selon l'une des revendications précédentes, **caractérisé en ce que** le corps de déviation (1) comporte une zone d'appui (20) pour l'appui de la ceinture de sécurité (2) sur le corps de déviation (1), la ceinture de sécurité (2) étant passée autour de la zone d'appui (20).

**13.** Dispositif de déviation de serrure selon la revendication 5 et la revendication 12, **caractérisé en ce que** la zone d'appui (20) est réalisée sur la première partie (12) du corps de déviation (1).

**14.** Dispositif de déviation de serrure selon la revendication 3 et selon la revendication 12 ou 13, **caractérisé en ce que** la zone d'appui (20) est réalisée de manière à coopérer avec la ceinture de sécurité (2) de telle façon que sous une force, attaquant le segment d'épaule (7), qui dépasse la force de seuil prédéterminée, la ceinture de sécurité (2) appliquée contre la zone d'appui (20) entraîne le corps de déviation (1) en un mouvement de rotation, de telle façon que ledit au moins un élément (3) étendu en longueur est déroulé depuis le corps de déviation (1), la zone d'appui (20) étant en particulier réalisée de manière à coopérer avec la ceinture de sécurité (2) de telle façon que sous une force, attaquant le segment d'épaule (7), qui dépasse la force de seuil prédéterminée, le corps de déviation (1) est entraîné par la ceinture de sécurité (2) en raison d'une augmentation de la friction entre la zone d'appui (20) et la ceinture de sécurité (2), et **en ce que** ladite friction entre la zone d'appui (20) et la ceinture de sécurité (2) permet, lorsque la force attaquant le segment d'épaule (7) est inférieure à ladite force de seuil, un coulissement de la ceinture de sécurité (2) sur le corps de déviation (1), sans que celui-ci soit entraîné par la ceinture de sécurité (2).

**15.** Dispositif de déviation de serrure selon l'une des revendications précédentes, **caractérisé en ce que** le rapport (Rs/Rl) de la longueur du bras de levier (Rs) d'une force attaquant le corps de déviation (1) via le segment d'épaule (7) sur la longueur du bras de levier (R1) d'une force attaquant le corps de déviation (1) via le segment de pelvis (5), les longueurs respectives des bras de levier (Rs, R1) se référant à un point de roulement momentané (MP) du corps de déviation (1), est inférieur lorsque l'élément (3) étendu en longueur n'est pas déroulé, à celui dans le cas d'un élément (3) étendu en longueur au moins partiellement déroulé, en particulier de 90°, le rapport précité (Rs/Rl) adoptant en particulier des valeurs dans la plage de 1,3 inclus à 6 inclus.

FIG 1

7
2
FSchulter
v=vSG
VSG
SG
VM
M
1
16
5
FBecken
⊗9
MP
v=0

FIG 2

1
SG
S
⊗9
1
M
M
5
16
16
3
FBecken
MP
MP
FEinspannung

FIG 3

SG
1
r
M
16
r
MP
5
9
3
$F_{Becken}$
$F_{Einspannung}$

FIG 4

2
7
$F_{Schulter}$
SG
1
r
M
$F_{EA}=2*F_{Schulter}$
8
16
r
5
9
3
MP
$F_{Becken}$
$F_{Einspannung}$

FIG 5

7
2
13
3
9
12
20
8
11
5
1
16
3
8
4

FIG 6

7
2
8
FSchulter
Schultergurt v=vSG
VSG
SG
8
VM
M
5
⊗9
16
1
FBecken
Beckengurt v=0
MP

FIG 7

F Schulter
7
2
SG
1
8
M
16
5
9
F Becken
MP
8a
3
8b
4

FIG 8

12
13
9
1
7
20
11
5
16
3a
3
3

FIG 9
7
2
12
1
20
9
22
21
16
5

FIG 10
7
2
12
1
20
9
22
21
5
16

FIG 11

7
2
31
32
30
21
33
32
30
12
31
1
21
33
9
16
22
20
33
32
30
31
21
5

FIG 12

7
2
33
32
30
21
31
32
22
30
12
31
21
1
33
9
33
20
16
32
30
21
31
5

FIG 13
7
2
33
30
21
31
1
33
30
12
21
31
20
9
16
22
21
5
33
30
31

FIG 14
7
2
33
30
31
21
22
1
20
12
21
31
9
30
16
33
21
5
33
30
31

FIG 15

7
2
33
34
30
21
31
33
1
30
31
12
21
9
20
16
22
33
30
21
31
5

FIG 16

7
2
33
34
30
21
31
1
34
22
20
12
21
31
9
30
33
16
33
34
21
31
30
5

FIG 17
34
31
7
2
35
36
30
21
33
37
36
35
33
34
30
1
21
31
12
37
20
9
36
22
35
16
33
37
30
21
34
5
31

FIG 18
34
37
35
7
2
33
36
21
31
30
33
37
36
1
20
34
12
30
21
31
9
16
36
35
35
22
21
33
37
34
30
5
31

FIG 19

7
2
30
33
21
31
1
30
33
21
12
31
20
9
16
22
21
33
30
31
5

FIG 20

7
2
30
21
31
33
20
1
33
21
12
30
31
9
16
22
31
33
21
30
5

FIG 21

40
41
12
31
9
1
40
40
22
33
41
41
40
21
41
30
40
16
41
20

FIG 22

31
12
40
1
40
41
41
40
33
9
41
40
21
41
20
40
30
16
22

FIG 23

7
2
12
1
50
50
50
16
9
21
22
21
22
21
20
31

FIG 24

7
2
50
1
50
12
50
16
9
21
22
21
22
21
20
31
21

FIG 25

7
2
50
60
1
60
12
60
16
9
61
21
22
61
31
61
20


FIG 26

7
2
50
60
60
1
12
16
60
9
61
21
22
61
31
61
20

FIG 27
SG
7
2
14
17
9
15
20
1
3
16
11
12
5
MP
15a
4

FIG 28
7
2
SG
15
9
17a
12
1
17
20
3
16
5
14
MP
11
4

FIG 29
7
2
14
SG
9
11
20
3
17
16
1
4
12
MP
5
15

FIG 30
1
SG
7
2
16
14
20
3
12
9
15a
11
15
4
5
MP
14a

FIG 31
1
SG
7
2
15a
15
16
12
20
9
14a
3
4
5
14
11
MP

FIG 32
7
2
12
11
1
3
14
9
15
5
4

FIG 33
7
2
12
11
1
3
15
9
14
5
4

FIG 34
7
2
11
12
3
15
9
14
5
4

FIG 35
3
3b
3b
9
3
4
13
1
12
3
FIG 36
9
11
16
3
4

FIG 37
13
20
1
3
9
12
11
16
3
4
22a
1
21
12
60
22
9
21
22
60
22

FIG 38

22a
3
20
9
12
1
12a
13
100
3
4

FIG 39

3b
9
3
4

FIG 40

16
3
21
22
20
12
50
9
13
3
4

FIG 41

3b
9
3
4

FIG 42
50
20
1
12
21
3
12b
402
22
402
3
400
100
13
9
400
4
FIG 43
3
402
100
3b
401
3
402
400
13
9
400
4
FIG 44
3
402
11
100
401
3b
400
3
402
13
9
400
4

FIG 45

2
SG
7
11
12
16
3
100
M
⊗9
1
MP
20
Rs
RL
4
16b
12a
16a
5

FIG 46

Rs/RL
B
A
0°
90°
180°
270°
Abrollwinkel

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 3233797 C1